# EUROPÄISCHE PATENTSCHRIFT

(11) **EP 3 383 237 B1**
(45) Veröffentlichungstag und Bekanntmachung des Hinweises auf die Patenterteilung: **09.08.2023**
(21) Anmeldenummer: 17701418.0
(22) Anmeldetag: 11.01.2017
(51) Int. Cl.: A47J 31/40

(54) **VORRICHTUNG ZUR ZUBEREITUNG VON BABYNAHRUNG**
DEVICE FOR PREPARING BABY FOOD
DISPOSITIF DE PRÉPARATION DE NOURRITURE POUR BÉBÉ

(30) Priorität: 14.01.2016 DE 102016000406
(43) Veröffentlichungstag der Anmeldung: 10.10.2018
(73) Patentinhaber: SMIICS GmbH, 37083 Göttingen (DE)
(72) Erfinder: SCHLACK, Stefan, 37083 Göttingen (DE)
(74) Vertreter: Müller-Boré & Partner Patentanwälte PartG mbB
(86) Internationale Anmeldenummer: PCT/EP2017/000030
(87) Internationale Veröffentlichungsnummer: WO 2017/121638

(56) Entgegenhaltungen:
- WO-A1-01/49154
- WO-A2-2007/135608
- WO-A2-2010/148160
- DE-A1- 2 944 333
- US-A- 4 576 603
- US-A- 5 570 816
- US-A- 5 797 313
- US-A1- 2006 157 463

## Beschreibung

Die Erfindung betrifft eine Vorrichtung zur Zubereitung von Babynahrung, insbesondere von Babymilch, Babybrei etc.

Bei der Zubereitung von Babynahrung aus Babynahrungskonzentrat wird Wasser erwärmt, eine entsprechende Konzentratmengen abgemessen und mit dem erwärmten Wasser vor dem Verabreichen der Nahrung zubereitet bzw. vermischt.

Die Zubereitung bedeutet dabei, dass die einzelnen Zutaten vermischt oder ineinander gelöst, erwärmt oder auf anderweitige Weise verzehrfertig gemacht werden.

Dies erfolgt häufig auch während der Nacht, wobei die Person, welche die Zubereitung der Nahrung durchführt, häufig aufgrund von mit der Säuglingspflege einhergehender Übermüdung eine verringerte Konzentrationsfähigkeit hat. Nachteilig dabei ist insbesondere, dass die Tätigkeit der Nahrungszubereitung als mühselig empfunden werden kann und beim Hantieren mit erhitzter Flüssigkeit mitunter Verbrühungs- bzw. Verletzungsrisiken für die zubereitende Person bestehen.

WO 2010/148160 A2 beschreibt eine Vorrichtung zum genauen Abgeben eines Pulvers, wie z. B. einer pulverisierten Säuglingsnahrung, in einen Behälter und zum Pasteurisieren und Wiederherstellen der pulverförmigen Formulierung, während die Formulierung vollständig in dem Behälter gemischt wird. Die Vorrichtung umfasst eine Trichteranordnung zum Aufbewahren von Pulver, eine Dosieranordnung zum Messen und Abgeben von Pulver in den Behälter, eine Verdünnungsanordnung und eine Mischanordnung zum Erhalten einer genau und vollständig gemischten Formulierung aus dem abgegebenen Pulver.

DE 29 44 333 A1 beschreibt eine Vorrichtung zum Verabreichen einer vorbestimmten Menge Flüssigkeit umfassend ein Reservoir für Flüssigkeit, eine Einlasseinrichtung, die tätig ist, um Flüssigkeit in das Reservoir bis zu einem vorbestimmten Bezugspegel einzulassen, und eine Verabreichungseinrichtung, die tätig ist, um Flüssigkeit aus dem Reservoir zu pumpen, bis der Flüssigkeitspegel darin von dem Bezugspegel auf einen vorbestimmten niedrigeren Pegel fällt.

US 5 797 313 A beschreibt ein elektrisches Gerät zum automatischen Zubereiten von Säuglingsnahrung zu einer vorgeschriebenen Stunde und zum Beibehalten einer bevorzugten Temperatur der zubereiteten Säuglingsnahrung für einen begrenzten Zeitraum vor dem Verzehr durch ein Kind. Das Gerät kann von einer beliebigen Stromquelle gespeist werden, um entweder Wechselstrom oder Gleichstrom bereitzustellen.

WO 2007/135608 A2 beschreibt eine Vorrichtung zum Zubereiten eines Getränkes, zum Beispiel Babymilch, aus Wasser und einem Instantprodukt, zum Beispiel einer Formel. Die Vorrichtung umfasst ein Wasserversorgungssystem zum Zuführen von Wasser, eine Heizvorrichtung zum Sterilisieren von Wasser durch Erhitzen und eine Kühlvorrichtung zum Kühlen von in der Heizvorrichtung erwärmtem Wasser. Das Kühlgerät verwendet Wasser aus der Wasserversorgung als Kühlwasser. Das Wasser, das in der Heizvorrichtung sterilisiert wird, wurde in der Kühlvorrichtung vorzugsweise zuvor als Kühlwasser verwendet. Die Kühlvorrichtung kann einen Gegenstromwärmetauscher umfassen.

US 2006/157463 A1 beschreibt ein Gerät, welches Wasser und trockenes Pulver, wie trockenes Babymilchpulver, zur Zubereitung mehrerer Lebensmittelmengen aufnimmt und speichert. Die Vorrichtung misst und gibt eine exakte vorbestimmte Menge an trockenem Pulver als Reaktion auf Anweisungen, die an einer Schnittstellenvorrichtung über Volumeneingangssteuerungen offenbart sind, und misst, heizt und gibt eine exakte Menge Wasser als Reaktion auf Temperatureingangssteuerungen ab.

US 5 570 816 A beschreibt ein Gerät zum Herstellen und Kombinieren von warmem sterilem Wasser mit trockener Babynahrung. Das Gerät muss eine Wasserquelle enthalten, die ausreicht, um mindestens eine Flasche bis zur gewünschten Menge zu füllen und mit der Formulierung zu kombinieren. Eine Heizvorrichtung ist enthalten, um Wasser durch Kochen zu sterilisieren. Eine Kühlvorrichtung im Gerät senkt die Wassertemperatur auf die empfohlene Mischtemperatur mit trockener Formulierung. Eine Freigabevorrichtung ist vorgesehen, um die empfohlenen Mengen an Wasser und Trockenformulierung direkt in eine Flasche freizusetzen.

US 4 576 603 A beschreibt eine Vorrichtung, die im medizinischen Bereich eingesetzt werden, um flüssige Nahrung direkt in den Verdauungstrakt eines Patienten zu verabreichen. Die Vorrichtung umfasst ein Hauptreservoir, das abwechselnd zwei Zuführkammern füllt, aus denen die Flüssigkeit dem Patienten durch Schwerkraft verabreicht wird.

Aufgabe der vorliegenden Erfindung ist es daher, eine Vorrichtung bereitzustellen, mittels welcher die Zubereitung von Babynahrung, insbesondere Babymilch, vereinfacht und deutlich sicherer gemacht wird.

Diese Aufgabe wird erfindungsgemäß durch eine Vorrichtung zur Dosierung und Zubereitung von Babynahrung mit Merkmalen des Anspruchs 1, durch einen Dosier-und/oder Sterilisations-Beutel zur Verwendung als auswechselbarer bzw. als Wegwerfartikel ausgebildeter Beutel und/oder Beutel-Schlauch-Set in dieser Vorrichtung gemäß Anspruch 11, sowie durch eine Zubereitungseinrichtung für diese Vorrichtung gemäß Anspruch 14 gelöst. Vorteilhafte Ausbildungen sind Gegenstand der Unteransprüche. Demnach ist ein Vorrichtung mit wenigstens einem ersten Anschluss zum Verbinden mit wenigstens einer Babynahrungskonzentratquelle vorgesehen, mit wenigstens einem zweiten Anschluss zum Verbinden mit wenigstens einer Flüssigkeitsquelle, insbesondere Wasserquelle, insbesondere wenigstens einer Heizeinrichtung zum Erhitzen der Flüssigkeit und/oder der Babynahrung, wenigstens einer Zubereitungseinrichtung zum Zubereiten der Flüssigkeit und des Babynahrungskonzentrats und wenigstens einem Auslass zum Einfüllen der Flüssigkeit und des Babynahrungskonzentrats in eine Babyflasche.

Erfindungsgemäß ist es somit möglich mittels der Vorrichtung eine Babyflasche mit Babynahrung zu füllen, welche korrekt zubereitet und entsprechend temperiert bereit zur Verabreichung an das Baby ist. Durch die vorrichtungsbedingte Automatisierung bzw. Vereinfachung des Zubereitungsvorgangs entfällt das unter Umständen mühselige Zubereiten der Babynahrung.

Erfindungsgemäß kann die Flüssigkeitsquelle auch zwei getrennte Flüssigkeitsbehälter umfassen, von denen einer mit kalter und einer mit warmer oder heißer Flüssigkeit befüllbar ist. Die Flüssigkeitsbehälter können dabei thermisch isoliert sein. Zur Zubereitung der Babynahrung kann das Babynahrungskonzentrat bzw. das Konzentrat zunächst manuell oder auf sonstige Weise in die Babyflasche eingebracht werden. Demnach kann in einer derartigen Ausführung die Babyflasche selbst die Babynahrungskonzentratquelle sein. Zu einem gegebenenfalls späteren Zeitpunkt kann das in den beiden Flüssigkeitsbehältern vorgehalten Wasser in einem bestimmten Verhältnis in die Babyflasche eingebracht werden, wobei eine Mischvorrichtung bereitgestellt sein kann, die sicherstellt, dass das in der Babyflasche gemischte Wasser eine gewünschte Temperatur hat. Hierzu kann das kalte und das warme bzw. heiße Wasser der beiden Flüssigkeitsbehälter in einem entsprechenden Verhältnis gemischt werden. Thermometer können dabei die Temperaturen in den Flüssigkeitsbehältern und/oder in der Babyflasche erfassen und die Mischvorrichtung kann selbst die benötigten Mengen an heißem und kalten Wasser mischen oder einem Benutzer anzeigen, in welchem Verhältnis das Wasser zu mischen ist um eine gewünschte Trinktemperatur zu erhalten. Mittels der Zubereitungseinrichtung kann dann die Babynahrung entsprechend zubereitet bzw. gemischt werden.

Der Auslass oder auch zwei getrennte Auslässe für die Flüssigkeit und das Babynahrungskonzentrat können dabei so angeordnet sein, dass innerhalb der Vorrichtung gar keine oder die gesamte Vermischung von Babynahrungskonzentrat und der Flüssigkeit erfolgt. Dafür können die Auslässe so an der Zubereitungseinrichtung getrennt vorgesehen sein, dass das Babynahrungskonzentrat und die Flüssigkeit getrennt voneinander in die Babyflasche eingeleitet werden. Hierzu können die Auslässe getrennt voneinander an einer Seite der Zubereitungseinrichtung vorgesehen sein, die der Babyflasche zugewandt ist bzw. an welcher Seite die Babyflasche mit ihrer Öffnung anschließbar ist.

Alternativ oder zusätzlich ist auch denkbar, dass die getrennten Auslässe innerhalb eines Schlauchs oder mehrerer Schläuche vorgesehen sind, wobei der Schlauch oder die Schläuche einen gemeinsamen Einlass oder Einlassbereich zum Einlassen der Flüssigkeit und/oder des Babynahrungskonzentrats in die Babyflasche umfassen können. Die zwei Auslässe können dabei innerhalb der Vorrichtung vorgesehen sein und nicht getrennt in den Behälter bzw. in die Babyflasche sondern in eine dem Behälter vorgelagerte Misch- und/oder Pumpvorrichtung oder ein sonstiges Behältnis münden.

Die Heizeinrichtung kann dabei dazu eingerichtet sein, dass die Flüssigkeit und/oder die Babynahrung auf eine zum Verabreichen geeignete Temperatur von beispielsweise weniger als 50°C, insbesondere von zwischen 20°C und 45°C und besonders bevorzugt von 37°C ±5°C erwärmt wird. Die Vorrichtung kann eine Vermischung von z.B. Babymilchkonzentrat und Wasser erst innerhalb des Behälters ermöglichen. Dies kann dadurch erreicht werden, dass die Zubereitungseinrichtung so mit dem Behälter koppelbar ist, dass Konzentrat und Wasser noch getrennt voneinander in den Behälter eingefüllt werden und die Zubereitung der Babymilch bzw. Vermengung von Babymilchkonzentrat und Wasser erst nach dem Einfüllen der einzelnen Komponenten in den Behälter und innerhalb des Behälters erfolgt. Mit dieser Vorrichtung ist es dem Anwender auch möglich jedes beliebige im Handel verfügbare Babypulver oder Konzentrat zu verwenden. Alternativ oder zusätzlich ist eine Ausführung denkbar, bei der die Heizeinrichtung dazu eingerichtet ist, die Flüssigkeit und/oder die Babynahrung abzukochen bzw. auf ca. 100°C zu erhitzen. Damit kann die Heizeinrichtung in Zusammenwirkung mit einem Dosier-und Sterilisations-Beutel zum Sterilisieren der jeweiligen Substanzen genutzt werden.

Erfindungsgemäß ist vorgesehen, dass wenigstens ein vorzugsweise auswechselbarer Schlauch oder Schlauchabschnitt zum Leiten des Babynahrungskonzentrats und/oder der Babynahrung und/oder des Wassers oder einer sonstigen, das Babynahrungskonzentrat lösenden Flüssigkeit vorgesehen ist. Denkbar ist auch dass die Babynahrungskonzentratquelle und/oder die Flüssigkeitsquelle und/oder der Behälter auswechselbare Bestandteile der Vorrichtung sind und/oder aus einem kombinierten Beutel- und Schlauch-Set bestehen oder mit einem solchen verbunden sind. Derartige insbesondere einstückig gefertigte Beutel- und Schlauch-Sets können dabei einen Schlauchabschnitt aufweisen und einen verglichen damit beispielsweise voluminöseren Beutelabschnitt auf. Der oben genannte, auswechselbare Schlauchabschnitt kann sich auf einen solchen, zu einem kombinierten Beutel- und Schlauch-Set gehörenden Schlauchabschnitt beziehen. Der Beutelabschnitt kann alternativ oder zusätzlich einen größeren Querschnitt aufweisen als der Schlauchabschnitt. Damit benötigen Beutel- und Schlauch-Sets weniger Stauraum und können ferner mit weniger zu verbindenden Komponenten mit der Vorrichtung gekoppelt werden. Insbesondere kann auf einen getrennten Schlauch verzichtete werde.

Werden Schläuche verwendet, so können diese als wiederverwendbare Schläuche oder als Wegwerfteile ausgebildet sein. Durch entsprechendes Auswechseln bzw. Reinigen der Schläuche sowie der Konzentrat- und der Wasserquelle kann so die Einhaltung von notwendigen Hygienestandards erleichtert werden. Die Babynahrungskonzentratquelle und/oder die Flüssigkeitsquelle und/oder die Babyflasche können ferner aus Beuteln, Schlauch-Sets und/oder Beutel-Schlauch-Sets bestehen oder mit diesen verbunden sein, wobei die genannten Komponenten flexibel ausgebildet sein können und damit einen vorteilhaft geringen Stauraum benötigen. Damit kann auch eine Ausführung gemeint sein, in der ein Dosier-und Sterilisations-Beutel, wie er weiter unten beschrieben ist, für die Flüssigkeit und/oder für das Babynahrungskonzentrat einstückig mit einem entsprechenden Schlauch bzw. Schlauchabschnitt ausgebildet ist oder mit dem Schlauchabschnitt identisch ist, wobei der Schlauch zum Dosieren des Inhalts des Beutels von den im Folgenden näher beschriebenen Klammen oder einer den Klammern analogen Einrichtung umfasst bzw. abgedrückt werden kann.

In einer weiteren vorteilhaften Ausbildung ist denkbar, dass wenigstens ein Filter zum Reinigen und/oder Sterilisieren der Flüssigkeit, insbesondere des Wassers vorgesehen ist. Der Filter kann dabei zwischen der Flüssigkeitsquelle und dem Auslass der Vorrichtung vorgesehen sein, sodass Flüssigkeit beim Durchströmen der Vorrichtung entsprechend filtriert bzw. sterilisiert werden kann. Vorzugsweise ist der Filter so ausgebildet, dass die Flüssigkeit filtriert bzw. sterilisiert wird, bevor sie mit dem Konzentrat in Kontakt kommt. Der Filter kann auch direkt an der Zubereitungseinrichtung angebracht sein. Die Zubereitungseinrichtung kann ferner direkt mit dem Behälter (Babyflasche) verbunden werden, ggf. unter Zuhilfenahme eines Adapters. Hierdurch ergibt sich ein geschlossenes System aus Behälter und Zubereitungseinrichtung. Diese Verbindung kann direkt nach der Sterilisation/Autoklavierung beider Teile erfolgen. Zum Befüllen kann sich die Zubereitungseinrichtung nebst Flasche mit den Wasser- und Konzentratschläuchen verbinden. Durch Verwendung eines entsprechenden Sterilfilters kann das Abkochen des Wassers zum Zwecke der Sterilisierung entfallen.

Alternativ ist es denkbar, dass die Zubereitungseinrichtung einen Bestandteil der Vorrichtung darstellt und über einen Babyflaschen-Aufsatz mit dem Behälter verbunden werden kann. Die Zubereitungseinrichtung wäre auch in diesem Fall als Austauschkomponente denkbar bzw. Teile davon könnten als Austausch- bzw. Wegwerfkomponenten ausgeführt sein. Der Filter selbst kann dabei wie auch die Schläuche und der Behälter sowie die Flüssigkeits- und die Babynahrungskonzentratquelle als Wegwerfteil konzipiert sein.

In einer weiteren vorteilhaften Ausbildung ist denkbar, dass die Zubereitungseinrichtung wenigstens einen Rührer und/oder wenigstens eine Sprühdüse umfasst und/oder dass die Zubereitungseinrichtung als auswechselbares Verbrauchsteil ausgebildet ist. Die Zubereitung kann dabei das Vermischen des Babynahrungskonzentrats mit der Flüssigkeit bzw. das Lösen des Babynahrungskonzentrats in der Flüssigkeit umfassen. Bei dem Konzentrat kann es sich um einen Feststoff, insbesondere um ein Pulver oder um eine konzentrierte Flüssigkeit handeln.

Der Rührer kann dabei so ausgebildet sein, dass er in einen Behälter eingreift, welcher im Bereich des Auslasses der Vorrichtung positionierbar ist. Der Rührer kann ferner zum Drehen angetrieben sein, wobei das Drehen des Rührer durch einen Fluidstrom oder durch einen eigenen Antrieb, wie beispielsweise einen Motor des Rührers, bewirkt wird.

In einer weiteren vorteilhaften Ausbildung ist denkbar, dass der erste Anschluss eine Einstechnadel zum Einstechen in die Babynahrungskonzentratquelle umfasst. Die Einstechnadel kann dabei wie die Leitungen und weitere Teile der Vorrichtung auch als Wegwerfartikel zur besseren Gewährung von hygienischen Standards ausgebildet sein. Die Nadel kann ferner aus Kunststoff gefertigt sein. Insgesamt können an der Vorrichtung beispielsweise drei oder auch mehr oder weniger Nadeln vorgesehen sein, die zur Gewährleistung hygienischer Standards in die einzelnen Zutatenquellen (Babynahrungskonzentratquelle, Flüssigkeitsquelle) sowie in den mit der Babynahrung zu befüllenden Behälter eingeführt werden können.

In einer weiteren vorteilhaften Ausbildung ist denkbar, dass wenigstens eine Pumpe zum Zuführen des Babynahrungskonzentrats und/oder der Flüssigkeit vorgesehen ist, und/oder dass Mittel vorgesehen sind, die derart ausgebildet sind, dass das Babynahrungskonzentrat und/oder die Flüssigkeit gravimetrisch zur Zubereitung zugeführt werden.

Erfindungsgemäß ist ferner vorgesehen, dass eine Dosierungseinrichtung vorgesehen ist, die zum Dosieren des Konzentrats und/oder der Flüssigkeit ausgebildet ist und insbesondere an dem Schlauch oder Schlauchabschnitt verschieblich angeordnete Klammern umfasst. Diese Klammern können über eine Steuerungs-/Regelungseinrichtung elektronisch oder manuell gesteuert werden. Der Begriff der Klammern ist hierbei weit auszulegen und kann jedwede Komponenten der Dosierungseinrichtung umfassen, welche mit einem insbesondere flexiblen Abschnitt des Schlauchs und/oder des Schlauchabschnitts zum Dosieren des darin vorgesehenen Inhalts wechselwirken können. Die Dosierungseinrichtung kann demnach vibrierende Rollen, einen vibrierenden Keil, einen vibrierenden Löffel oder ähnliches umfassen, die im Zusammenwirken mit dem flexiblen Abschnitt eine Dosierung des Pulvers ermöglichen.

Die Dosierung ist demnach in einem flexiblen, abklemmbaren Material, zum Beispiel in einem Bag, Schlauch oder einer Schlauch/Bag Kombination etc. für Wasser und Pulver bzw. Konzentrat möglich. Wird Wasser dosiert, so ist es dabei möglich, eine Kombination aus Dosierung und Sterilisation des Wassers innerhalb des abgeklemmten Materials durchzuführen.

Die Dosierung oder eine Kombination aus Dosierung und Sterilisation kann zum Beispiel durch verschiebbare Klammern erreicht werden aber auch durch ein rotierendes Rad oder Räder, einen Keil oder Keile etc. Denkbar wäre auch eine Kombination aus Abklemmen einer obere Klammer bzw. einer oberhalb eines Ventils angeordneten Klammern und einem entsprechend Betätigen des Ventils beim Auslass der Flüssigkeit oder des Konzentrats.

Dabei kann die Dosierungseinrichtung dazu eingerichtet sein, den Schlauch und/oder den Schlauchabschnitt von außen in definierten Positionen mittels besagter Klammern abzudrücken und dadurch insbesondere zwischen den abgedrückten Stellen gewünschte Mengen des darin enthaltenen Inhalts zu dosieren. Die Dosierungseinrichtung kann alternativ oder zusätzlich auch als Einrichtung ausgebildet sein, die beispielsweise manuell durch Betätigen eines entsprechenden Betätigungsabschnitts festgelegte Dosiermengen in die Babyflasche abgibt. Eine Gewünschte Dosiermenge kann dabei über die entsprechend häufige Betätigung des Betätigungsabschnitts manuell oder automatisch erfolgen. Beispielsweise ist es denkbar, dass das Babynahrungskonzentrat manuell bzw. mittels des Betätigungsabschnitts in die Babyflasche eingefüllt wird, wohingegen zu einem späteren, vorbestimmten Zeitpunkt die Flüssigkeitszugabe insbesondere automatisch erfolgt und die Zubereitung der Babynahrung ebenfalls automatisch durchgeführt wird.

In einer weiteren vorteilhaften Ausbildung ist denkbar, dass eine Steuerungs-/Regelungseinrichtung vorgesehen ist, mittels der die Vorrichtung bedienbar, insbesondere fernbedienbar ist. Die Steuerung- /Regelungseinrichtung kann dabei eine Anzeigetafel bzw. ein Display umfassen und ferner modular um spezielle Ergänzungsmodule ergänzbar sein. Denkbar ist eine Ergänzung der Steuerungs-/Regelungseinrichtung um ein WLAN-Modul um das Fernbedienen der gesamten Vorrichtung zu ermöglichen. Die Steuerungs- /Regelungseinrichtung kann alle zur Zubereitung erforderlichen Schritte steuern/regeln, wie die Dosierung der Komponenten, das Erwärmen der Flüssigkeit und das Rühren bzw. Zubereiten oder Vermischen der Komponenten.

Denkbar ist auch eine Ausführung, bei der ein Teil oder alle der Funktionen der Vorrichtung manuell, das heißt ohne Nutzung einer Steuerungs-/Regelungseinrichtung einstellbar sind. Die Pulvermenge bzw. Babynahrungskonzentratmenge kann beispielsweise über wenigstens einen Drehknopf eingestellt werden, welcher zum Beabstanden der entsprechenden Klammern zueinander und/oder zum Offen und/oder Schließen der Klammern gedreht werden kann. Zur Einstellung der Flüssigkeitsmenge kann ebenfalls wenigstens ein eigener Drehknopf entsprechend verwendet werden oder es kann eine Übertragungsvorrichtung zwischen den Komponenten zur Einstellung der Babynahrungskonzentratquelle und den Komponenten zur Einstellung der Flüssigkeitsmenge vorgesehen sein, die beispielsweise eine Übersetzungseinrichtung bzw. ein Übersetzungsrad umfasst, die die zum Dosieren der Flüssigkeit vorgesehenen Klammern automatisch an die zum Dosieren des Konzentrats vorgesehenen Klammern anpassen bzw. koppeln. Vorteilhafterweise können so teure und fehleranfällige Elektronikkomponenten eingespart werden.

Das Einschalten der Vorrichtung kann auch bei manueller oder teilweise manueller Steuerung/Regelung über beispielsweise eine App erfolgen, wobei die Vorrichtung die manuell eingestellten Dosiermengen zubereiten kann.

Ferner kann ein Wasseraufbereitungsmodul ergänzt werden, das es ermöglicht Leitungswasser aufzubereiten und somit direkt zu verwenden. Diese und weitere Module sind dabei mit der Zentraleinheit bzw. mit der Steuerung-/Regelungseinrichtung oder der gesamten Vorrichtung einfach verbindbar, insbesondere durch Einrasten verbindbar. Die Steuerungs-/Regelungseinrichtung kann in der Gesamtvorrichtung integriert sein oder auch als externe Einrichtung bereitgestellt sein. Sie kann dabei drahtlos mit der Gesamtvorrichtung bzw. den einzelnen Komponenten der Vorrichtung kommunizieren oder über entsprechende Leitungen.

Denkbar ist es weiterhin, dass die Vorrichtung Mittel, insbesondere einen Scanner, zum Einlesen von Informationen der Babynahrungskonzentratquelle aufweist und/oder dass ein Babyflaschen-Aufsatz zum Koppeln des Behälters mit der Zubereitungseinrichtung bzw. der Vorrichtung vorgesehen ist. Die eingelesenen Daten können dann von der Steuerungs- / Regelungseinrichtung herangezogen werden, um den Zubereitungsvorgang entsprechend durchzuführen. Dazu ist die Babynahrungskonzentratquelle mit einem Barcode oder mit einem sonstigen Informationsmittel versehen, das die einlesbare Information enthält, z.B. eine Trinkmenge- und Dosierungs-Tabelle. Auch eine manuelle Eingabe der Rezeptur in die Steuerungseinheit ist denkbar.

Mittels des Babyflaschen-Aufsatzes bzw. mit der Zubereitungseinrichtung ggf. auch mit einem zusätzlichen Adapter ist eine Babyflasche bzw. der Behälter mit der Vorrichtung so koppelbar, dass die Zubereitung der Babynahrung innerhalb des Behälters durchgeführt werden kann. Hierzu kann der Behälter beispielsweise an die Zubereitungseinrichtung geschraubt oder angeklickt oder über einen Babyflaschen-Aufsatz verbunden werden. Der Babyflaschen-Aufsatz kann dabei einstückig mit der Zubereitungseinrichtung ausgebildet sein und beispielsweise ein Gewinde zum Anschrauben einer Babyflasche aufweisen. Hierdurch ergibt sich ein geschlossenes System aus Behälter und Zubereitungseinrichtung. Ein Adapter wird eingesetzt, um alle oder einen Teil der am Markt verfügbaren Babyflaschen an die Zubereitungseinrichtung zu koppeln. Zum Befüllen verbindet sich die Zubereitungseinrichtung nebst Behälter mit den Wasser- und Konzentratschläuchen. In einer Ausführung mit einem kombinierten Dosier-und Sterilisationsbeutel kann die Zubereitungseinrichtung entsprechend mit einer Öffnung eines derartigen Dosier- und Sterilisationsbeutels verbunden werden. Alternativ verbindet sich die Babyflasche nebst Babyflaschen-Aufsatz mit der an der Vorrichtung vorliegenden Zubereitungseinrichtung. Nach der Zubereitung der Babymilch kann die Zubereitungseinrichtung und/oder der Aufsatz vom Behälter getrennt werden und der Behälter mit einem Schnulleraufsatz oder mit einem anderen Aufsatz zum Verzehr oder sicheren Lagern des Behälterinhalts versehen werden.

In einer weiteren vorteilhaften Ausbildung ist denkbar, dass die Babynahrungskonzentratquelle und/oder die Flüssigkeitsquelle mit den Anschlüssen der Vorrichtung verbunden sind, d.h. dieser Aspekt der Erfindung betrifft nicht die Vorrichtung als solche, sondern die Vorrichtung mit daran oder darin angeordneten Babynahrungskonzentratquelle und/oder die Flüssigkeitsquelle.

Die Erfindung richtet sich auch auf die Verwendung einer Vorrichtung nach einem der Ansprüche 1 bis 11 zur Zubereitung von Babynahrung und zur Zubereitung eines Gemisches oder allgemein einer Lösung oder einer Suspension sowie auf die Verwendung einer Babynahrungskonzentratquelle in bzw. mit einer Vorrichtung nach einem der Ansprüche 1 bis 11.

Die Erfindung ist auch auf einen Dosier- und Sterilisations-Beutel für eine Vorrichtung gemäß einem der Ansprüche 1 bis 11 zur Zubereitung einer Suspension und/oder Emulsion, insbesondere von Babynahrung, wie beispielsweise Babymilch, gerichtet, wobei der Dosier- und Sterilisations-Beutel wenigstens zwei Anschlüsse zum Zu- und Ableiten einer Flüssigkeit umfasst.

Die Erfindung ist des Weiteren auf eine Zubereitungseinrichtung für eine Vorrichtung nach einem der Ansprüche 1 bis 11 gerichtet, wobei die Zubereitungseinrichtung mit einem Behälter koppelbar ist und einen Rührer umfasst, der zum Rühren des Inhalts des mit ihr gekoppeltem Behälters ausgebildet ist. Der Dosier-und Sterilisations-Beutel und die Zubereitungseinrichtung können weitere Merkmale umfassen, die in der Beschreibung erläutert sind.

Weitere Vorteile und Einzelheiten sind anhand der in den Figuren beispielhaft erläuterten Ausführungen aufgezeigt. Dabei zeigen:
- Fig. 1:: schematischer Aufbau einer erfindungsgemäßen Vorrichtung;
- Fig. 2:: Detailansicht des Aufbaus einer erfindungsgemäßen Vorrichtung für den Betrieb mit einer Druckpumpe;
- Fig. 3:: Detailansicht der Zubereitungseinrichtung einer erfindungsgemäßen Vorrichtung;
- Fig. 4:: Detailansicht des Aufbaus einer weiteren Ausführung der Erfindung;
- Fig. 5:: Detailansicht des Aufbaus einer erfindungsgemäßen Vorrichtung für den Betrieb mit einer Vakuumpumpe;
- Fig. 6:: Detailansicht des Aufbaus einer weiteren Ausführung der Erfindung. Verwendung mehrerer Konzentratquellen;
- Fig. 7:: Behälter einer Babynahrungskonzentratquelle und/oder Flüssigkeitsquelle mit Dosierleitung;
- Fig. 8 - 12:: Behälter mit unterschiedlichen Einrichtungen zur Kopplung des Behälters mit Klammern;
- Fig. 13:: kompakte Ausführung einer erfindungsgemäßen Vorrichtung;
- Fig. 14:: Zubereitungseinrichtung mit einem Adapter;
- Fig. 15:: Rührer einer Zubereitungseinrichtung mit Sprayball; und
- Fig. 16:: Ausführung der Vorrichtung mit einem Dosier- und Sterilisations-Beutel.

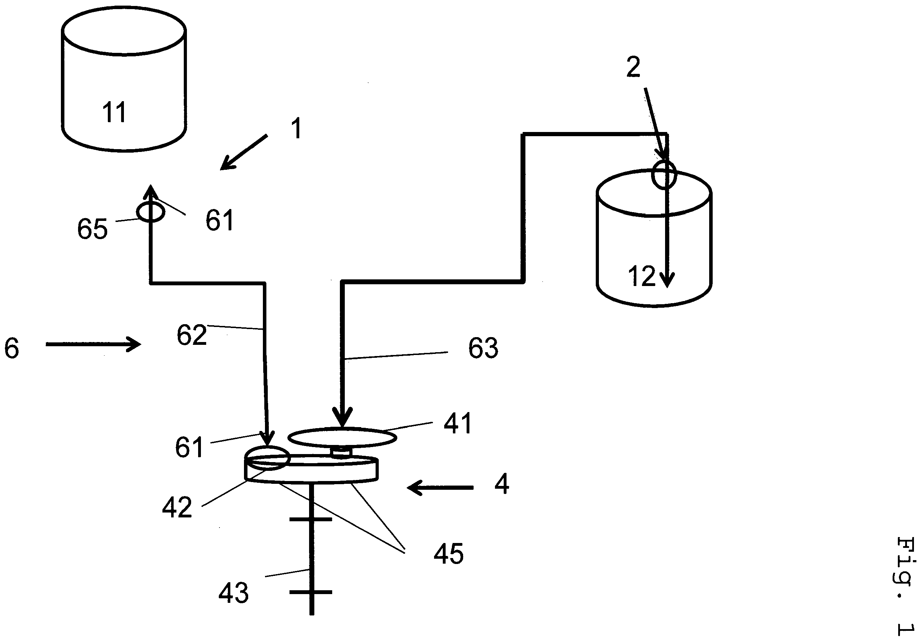

Figur 1 zeigt den schematischen Aufbau einer erfindungsgemäßen Vorrichtung zur Zubereitung von Babymilch. Das Ausführungsbeispiel bezieht sich entsprechend auch auf die Zubereitung beliebiger anderer Babynahrung oder Getränke.

Hierbei ist ein erster Anschluss 1 zum Verbinden der Vorrichtung mit wenigstens einer Babymilchkonzentratquelle 11 gezeigt. Bei der Babymilchkonzentratquelle 11 kann es sich beispielsweise um eine Babymilchpulvertüte handeln. Ein zweiter Anschluss 2 zum Verbinden mit wenigstens einer Flüssigkeitsquelle 12 kann zum Verbinden der Vorrichtung beispielsweise mit einer Wasserquelle genutzt werden.

Die Begriffe des ersten und zweiten Anschlusses 1, 2 sind vorliegend weit auszulegen. Sie können jegliche Merkmale bezeichnen, die es ermöglichen, die Babymilchkonzentratquelle 11 und die Flüssigkeitsquelle 12 mit der Vorrichtung zu verbinden. Die Anschlüsse 1, 2 können dabei Teil der Zubereitungseinrichtung 4 oder Teil von sonstigen Abschnitten der erfindungsgemäßen Vorrichtung sein. Die Anschlüsse 1, 2 können mit dem Auslass oder den Auslässen gekoppelt sein, wobei die Anschlüsse 1, 2 Teil des Schlauchs oder des Schlauchabschnitts sein können.

Im unteren Bereich der Figur 1 ist eine Zubereitungseinrichtung 4 gezeigt, die zur insbesondere mechanischen Zubereitung der Flüssigkeit und des Babymilchkonzentrats ausgelegt ist. Die Zubereitungseinrichtung 4 kann dabei wenigstens zwei Auslässe zum Einfüllen der Flüssigkeit und des Babymilchkonzentrats in einen in Figur 1 nicht gezeigten Behälter 10 aufweisen. Zubereitungseinrichtung 4 und Behälter 10 können hierbei miteinander verbunden werden.

An der Zubereitungseinrichtung 4 kann ein Septum 42 vorgesehen sein, durch das eine Einstechnadel 61 zum Transfer des Babymilchkonzentrats bzw. des Pulvers in den Behälter 10 eingestochen werden kann. Diese Nadel 61 kann beispielsweise aus Plastik gefertigt sein. An der Vorrichtung kann eine Sterilisationsvorrichtung, insbesondere eine UV-Lichtsterilisationsvorrichtung vorgesehen sein, mittels der die Einstechnadel 61 und/oder das Septum 42 sterilisiert werden können. An der Zubereitungseinrichtung 4 kann weiterhin ein Steril-Filter 41 vorgesehen sein, mittels dessen das in den Behälter 10 eingefüllte Wasser filtriert bzw. gereinigt werden kann. Zwischen der Zubereitungseinrichtung 4 und der Flüssigkeitsquelle 12 bzw. der Babymilchkonzentratquelle 11 können Schläuche 62 und 63 vorgesehen sein, durch die die jeweiligen Substanzen getrennt voneinander geleitet werden können. So kann über den Schlauch 62, der mit der Babymilchkonzentratquelle 11 verbunden ist, beispielsweise Pulver aus dieser Quelle, die beispielsweise eine Tüte sein kann, gesaugt werden. Dies kann jeweils in der Menge geschehen, die zur gewünschten Zubereitung benötigt wird. Es erfolgt eine gravimetrische Förderung der entsprechenden Babymilchkonzentratmenge. Hierzu kann vorgesehen sein, dass die Babymilchkonzentratquelle 4 über dem Behälter 10 angeordnet ist, so dass bei entsprechender Verbindung der beiden Behältnisse ein gravimetrisches Strömen des Inhalts der Babymilchkonzentratquelle 4 in den Behälter 10 bewirkt oder erleichtert wird. Das Babymilchkonzentrat wird über Zufuhrmittel in den Behälter 10 geleitet, wobei eine Förderschnecke bzw. Schnecke und/oder eine adaptierbare Klammer zur Realisierung verschiedener Dosierungen verwendet werden. Denkbar ist auch das Ansaugen mit einer Kammer etc. zu kombinieren.

Ähnliches gilt für die Förderung der Flüssigkeit bzw. des Wassers, wo mittels eines gravimetrischen Verfahrens Wasser über den entsprechenden Schlauch 63 zur Zubereitungseinrichtung gefördert wird. Das Endstück des entsprechenden Schlauchs 63 zum Anschluss an eine Flüssigkeitsquelle 12 kann dabei so ausgebildet sein, dass es beispielsweise auf die Verschlusskappe eines Tetrapacks passt bzw. mit dieser koppelbar ist. Der Anschluss an die Flüssigkeitsquelle kann auch so ausgebildet sein, dass damit eine Wasserflasche oder ein Wasserhahn für Leitungswasser mit der Vorrichtung gekoppelt werden kann. Hierzu kann an dem Endabschnitt des Schlauchs 63 ein entsprechender Aufsatz vorgesehen sein. Denkbar ist auch einen modularen Behälter als Flüssigkeitsquelle bereitzustellen, welcher einen zum Schlauch 63 zur Flüssigkeitsquelle 12 passenden Anschluss aufweist bzw. denselben Anschluss wie ein Tetra Pak, eine Wasserflasche oder ein Wasserhahn aufweist. Der Behälter kann auch als flexibler Behälter wie beispielsweise ein Beutel ausgebildet sein. Der Behälter kann ferner einen fest damit verbundenen Schlauch umfassen, welcher bei einem Behälterwechsel mitsamt dem Behälter gewechselt werden kann.

Es ist denkbar, insbesondere den Schlauch 63 zu der Flüssigkeitsquelle 12 derart auszubilden, dass er mit dem Filter 41 verbunden und insbesondere verrastet bzw. per Einklicken verbunden werden kann. Über den entsprechenden Schlauch 63 wird die Flüssigkeit bzw. das Wasser in die Vorrichtung eingeführt und dort erhitzt, wobei die benötigte Menge an erhitztem Wasser gemäß einer beispielsweise in der Steuerungs-/Regelungseinrichtung hinterlegten Rezeptur in den Behälter 10 bzw. Milchbehälter 10 eingefüllt wird. Nähere Angaben zur Rezeptur bzw. zu den Eigenschaften der Babymilchkonzentratquelle 11 oder zu deren Zubereitung können beispielsweise über einen Barcode oder einen sonstigen Datenträger von der Verpackung der Babymilchkonzentratquelle 11 an die Steuerungs-/Regelungseinrichtung übergeben werden. Daraus ergeben sich entsprechende Zubereitungsoptionen, die mittels der Vorrichtung ausgeführt werden können. Auch können Informationen zum Alter des Babymilchkonzentrats, zu dessen Zusammensetzung und/oder zu sonstigen Eigenschaften des Babymilchkonzentrats an der Babymilchkonzentratquelle 11 gespeichert und an die Steuerungs-/Regelungseinrichtung übertragen werden. Es ist denkbar eine Rezeptur auch manuell in die Steuerungseinheit einzugeben.

Die Steuerung der Vorrichtung kann über eine App, beispielsweise über ein Smartphone oder Tablet-PC und/oder über eine Fernbedienung erfolgen. Insbesondere das An- und Abschalten kann so gesteuert werden. Die App kann auch über einen ggf. erforderlichen Austausch von Verbrauchsmaterial wie beispielsweise Schläuchen 62 und 63, Filter 41 oder sonstigen Marialien der Vorrichtung informieren. Hierbei kann die Steuerungs- /Regelungseinrichtung über einen WLAN-Anschluss oder eine sonstige kabellose oder kabelgebundene Schnittstelle verfügen. Aus den Informationen, welche auf der Verpackung der Babymilchkonzentratquelle 11 angegeben sind, kann auch entnommen werden, welche Dosierung des Babymilchkonzentrats, welche Temperatur der Flüssigkeit, welche Rührtätigkeiten des Rührers 15 und gegebenenfalls welche anderen Parameter von der Vorrichtung zur Zubereitung der Babymilch eingehalten bzw. eingestellt werden sollen. Es ist denkbar diese Parameter auch manuell in die Steuerungseinheit einzugeben.

An der Babymilchkonzentratquelle 11 kann eine Klebestelle 65 vorgesehen sein, über welche eine weitere Einstechnadel 61 zum Entnehmen des Babymilchkonzentrats in die Babymilchkonzentratquelle 11 eingestochen wird.

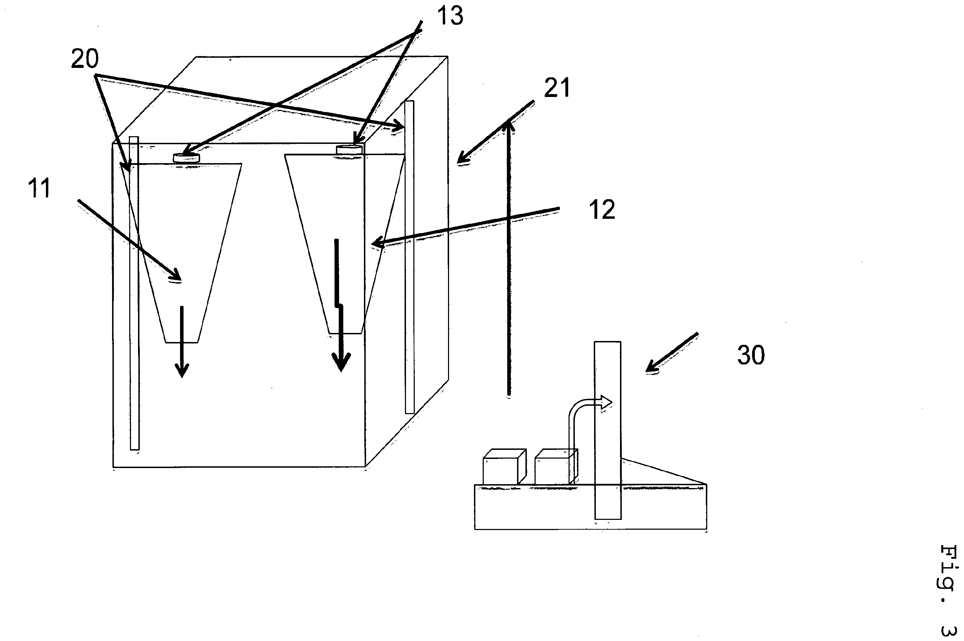

Figur 3 zeigt eine detailliertere Ausgestaltung der Vorrichtung, wobei die Babymilchkonzentratquelle 11 bzw. deren Verpackung und die Flüssigkeitsquelle 12 an entsprechenden Stützen 20 bereitgestellt werden können Der Flüssigkeits- und die Konzentrat-Quelle können an den Stützen aufgehängt werden. Denkbar ist es auch Ablagefächer in die Stützen einzuklicken zur Lagerung beider Quellen. Die Flüssigkeitsquelle 12 kann dabei einen Schraubverschluss 13 zum Nachfüllen der Flüssigkeit aufweisen. Die Stützen 20 können aufklappbar mit weiteren Bestandteilen der Vorrichtung gekoppelt sein, sodass bei der Lagerung beispielsweise im Verkaufsladen im Eingeklappten Zustand der Stützen 20 ein möglichst kleiner Footprint bzw. ein möglichst kleiner Raumbedarf der Vorrichtung gewährleistet ist.

Es ist auch denkbar, an der Außenseite der Vorrichtung beispielsweise im Bereich der aufgeklappten Stützen 20 aufziehbare Abdeckungen 21 vorzusehen, welche als Folie oder dergleichen ausgestaltet sein können und die Vorrichtung mindestens teilweise schließen oder abdecken können. Auch kann die Vorrichtung als komplett geschlossenes System ausgeführt sein.

Die Flüssigkeitsquelle 12 kann beispielsweise als Beutel für z.B. Wasser ausgebildet sein, welcher über den entsprechenden Schlauch 63 mit der Vorrichtung verbindbar ist. Der Beutel kann dabei als Wegwerfartikel ausgebildet sein und nach entsprechender Benutzungszeit von beispielsweise 2 Wochen weggeworfen und durch einen neuen ausgetauscht werden (ggf. inkl. des Schlauch-Sets 6 für Wasser). Somit entfällt die Notwendigkeit die Flüssigkeitsquelle 12 (plus des Schlauch-Sets 6 für Wasser) von Biofilmen oder chemischen Verschmutzungen zu reinigen.

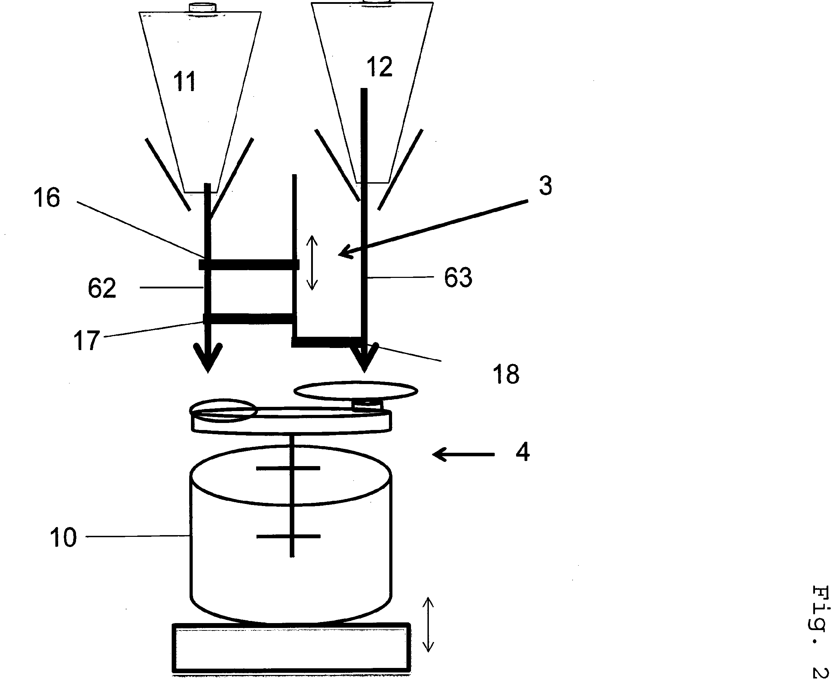

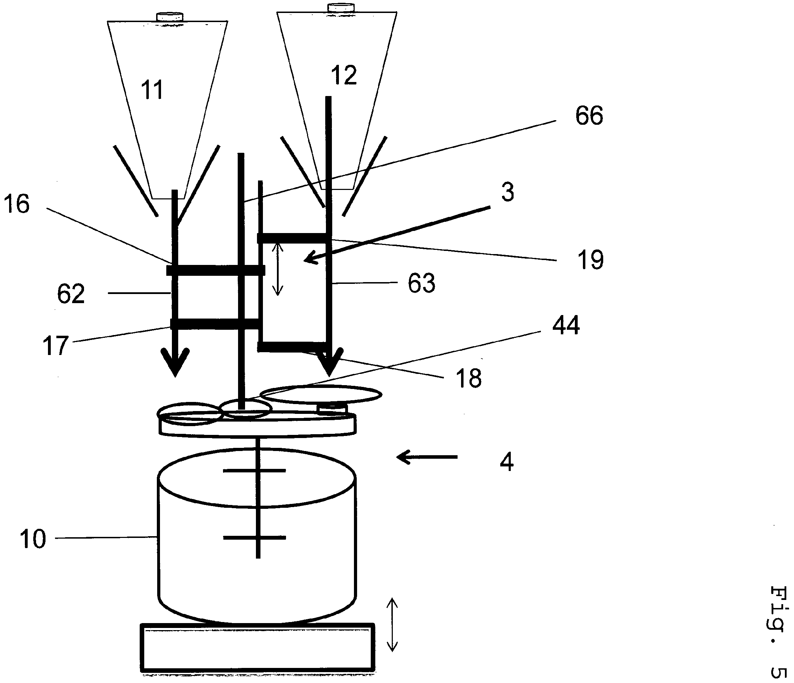

Die Vorrichtung kann eine Funktionseinheit 30 umfassen, welche einen Wassererhitzer bzw. die nicht gezeigte Heizeinrichtung 3 zum Erwärmen bzw. Erhitzen der Flüssigkeit umfasst, eine Vorrichtung zur Dosierung des Babymilchkonzentrats, einen Startknopf zum Durchführen der Zubereitung der Babymilch sowie weitere Elektronikkomponenten. Die Steuerungs-/Regelungseinrichtung kann dabei Teil der genannten Funktionseinheit sein. Die Funktionseinheit und/oder die Steuerungs-/Regelungseinrichtung kann beispielsweise eine Load Cell oder sonstige Sensorvorrichtungen zum Bestimmen der Restmenge des Babymilchkonzentrats und/oder des Fluids umfassen. Die Bestimmung kann auch über die Position der verschieblichen Klammern 16, 17 (Figur 2 und 5) erfolgen, wobei die Anzahl der Füllungen bzw. Zubereitungsvorgängen berücksichtigt wird. So kann ggf. eine automatische Bestellung z.B. über das Internet ausgelöst werden um neues Babymilchkonzentrat zu erhalten. Dabei kann durch die Steuerungs- /Regelungseinrichtung unter Berücksichtigung des Alters des zu versorgenden Kindes ein passender Vorschlag für die Auswahl des Babymilchkonzentrats gemacht werden. Selbstverständlich kann die Bestellung auch manuell je nach Bedarf geändert werden. Die Funktionseinheit 30 kann dabei dauerhaft mit den weiteren Komponenten der Vorrichtung gekoppelt sein oder lösbar mit diesen verbunden sein. Ein ähnliches Prinzip ist für das Wasser denkbar (Figur 2: Klammer 18, bzw. Figur 5: Klammer 18 und 19). Auf diese Weise kann das System überprüfen wieviel Wasser entnommen wurde und den Anwender über eine Nachfüllung informieren. Denkbar wäre allerdings auch eine Ermittlung über einen Fluss-Sensor, über eine Zeitdauermessung eines Pumpvorgangs oder eine Druckpumpe.

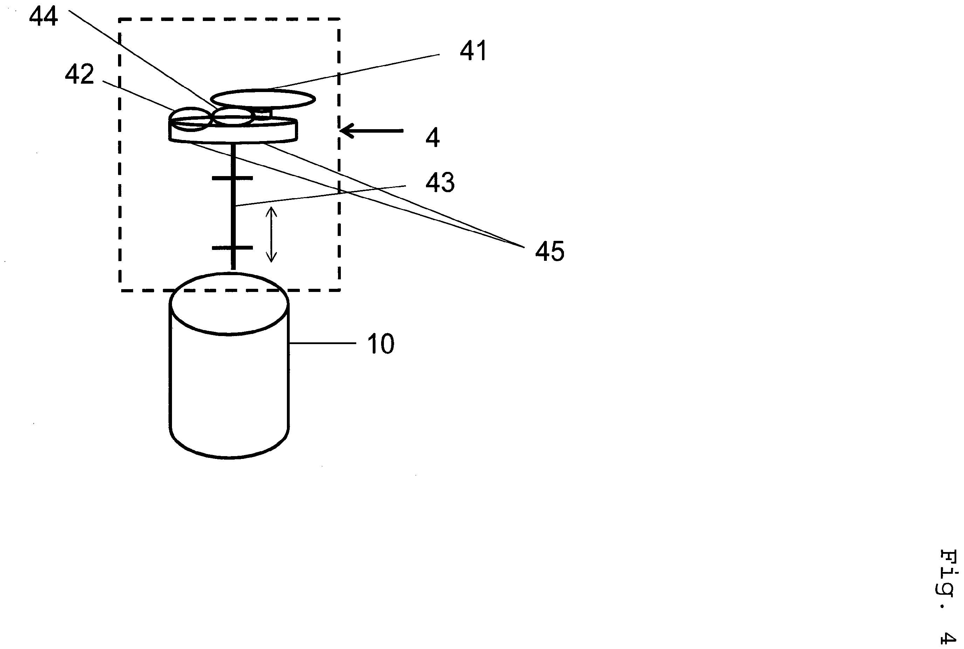

Figur 4 zeigen eine detailliertere Ansicht einer Zubereitungseinrichtung 4 mit Steril-Filter 41, Septum 42 sowie einem Rührer 43. Die Zubereitungseinrichtung 4 kann wenigstens teilweise in eine entsprechende Babyflasche 10 bzw. einen entsprechenden Behälter 10 eingeführt werden, sodass das Babymilchkonzentrat und die Flüssigkeit in den Behälter 10 eingeführt und dort verrührt werden können. Alternativ oder zusätzlich ist auch eine Ausgestaltung der Zubereitungseinrichtung 4 mit einer oder mehreren Sprühdüsen denkbar, die ebenfalls zur Zubereitung der Babymilch genutzt werden kann bzw. können. Die Zubereitungseinrichtung 4 kann nach einer bestimmten Gebrauchszeit ausgetauscht und beispielsweise in einem entsprechenden Sterilisator sterilisiert werden.

Die Zubereitungseinrichtung 4 kann ferner teleskopisch mit der Gesamtvorrichtung gekoppelt sein, um eine Anpassung auf verschiedene Flaschengrößen des Behälters 10 anpassbar zu sein. An der Zubereitungseinrichtung 4 ist ein Adapter vorgesehen, mittels dem unterschiedlichen Flaschengeometrien von Behältern 10 mit der Zubereitungseinrichtung 4 gekoppelt werden können. Ferner ist es denkbar, an dem Rührer 43 bzw. an der Zubereitungseinrichtung 4 einen Temperatur- und/oder pH-Sensor vorzusehen, der mit der Steuerungs-/Regelungseinrichtung gekoppelt sein kann und zur Kontrolle bzw. zur optimierten Zubereitung der Babymilch Messwerte an die Steuerungs-/Regelungseinrichtung sendet.

Die Zubereitungseinrichtung 4 bzw. die Rührer-Einheit 4, die Schlauch-Sets 6 für Babymilchkonzentrat und/oder Wasser, der Wasserbeutel bzw. Behälter 12 und/oder ein Wasseraufbereitungsmodul können dabei als wiederverwertbare oder als Wegwerfartikel ausgebildet sein.

Figur 2 zeigt einen alternativen Aufbau der Erfindung mit Ventilen, die beispielsweise als Klammern 16, 17 und 18 ausgebildet sein können und über welche die Zuführung von Wasser und/oder Babymilchkonzentrat gesteuert bzw. geregelt werden kann. Die Klammern 16, 17, 18 können dabei beispielsweise pneumatisch oder elektronisch bedient werden. Weitere Komponenten bzw. Bezugszeichen entsprechen denjenigen, die in den weiteren Figuren gezeigt sind.

Insbesondere die Pulverdosierung stellt eine hohe Herausforderung dar. Die Erfindung macht dies sehr kostengünstig möglich. Ferner ist es möglich auf diese Weise mit Wegwerfartikeln zu arbeiten.

Klammer 17 kann beim Zuführen des Babymilchkonzentrats bzw. des Konzentrats zunächst geschlossen sein, während Klammer 16 geöffnet ist. Das Konzentrat kann bis zur Klammer 17 gefördert werden bzw. automatisch oder von selbst bis dorthin fließen oder fallen. Es ist denkbar, hierfür eine Rütteleinrichtung vorzusehen, die die Konzentratförderung erleichtert oder ermöglicht. Die Klammern 16 und/oder 17 können je nach gewünschter Dosierung gemäß den Pfeilrichtungen nach oben oder unten adaptiert bzw. positioniert werden. Dies kann elektronisch über die Steuereinheit oder manuell passieren. Der Anwender kann z.B. eine gewünschte Rezeptur auswählen oder über den Scanner einlesen. Ist die für die gewünschte Dosierung notwendige Position wenigstens einer der Klammern 16, 17 erreicht, kann die dem zu befüllenden Behälter 10 nähere Klammer 16, 17 entsprechend geschlossen werden und der Bereich zwischen den Klammen 16, 17 mit Konzentrat in gewünschter Dosis gefüllt werden. Hierzu klemmen die Klammern 16, 17 einzeln oder gemeinsam den jeweils von ihnen umklammerten Bereich des jeweiligen Schlauchs ab. Danach kann die dem zu befüllenden Behälter 10 nähere Klammer 16, 17 geöffnet werden während die andere der beiden Klammern 16, 17 geschlossen ist und die entsprechend dosierte Menge an Babymilchkonzentrat in den Behälter 10 geleitet werden. Um ein Abfließen des Konzentrats (und im Falle der Dosierung einer Flüssigkeit entsprechend der Flüssigkeit) aus dem von den Klammern 16, 17 definierten Bereich zu ermöglichen kann hierzu beispielsweise Luft in diesen Bereich über eine entsprechende Luftzuführung eingeleitet werden. Es können auch mechanische Mittel zum Befördern des Konzentrats und/oder der Flüssigkeit aus dem Dosierungsbereich vorgesehen sein. Die Volumeneinstellung kann so komplett in dem Schlauch 62 erfolgen, welcher als Auswechselkomponente durch entsprechendes Auswechseln sauber gehalten werden kann. Die Dosierung des Wassers kann in dem Wasserschlauch 63 und mittels der entsprechenden Klammer 18 sowie gegebenenfalls weiterer nicht gezeigter Klammern analog zu der oben geschilderten Dosierung des Babymilchkonzentrats erfolgen.

Die mit dem Behälter 10 verbundene Zubereitungseinrichtung 4 kann auf einem Tablett nach oben verfahren werden und sich mit den Schläuchen 62 und 63 zu verbinden. Alternativ oder zusätzlich ist auch denkbar, dass die Schläuche nach unten verfahrbar sind. Die Einstechnadel 61 zur Pulver-Zufuhr in den Behälter 10 kann dabei durch das Septum 42 der Zubereitungseinrichtung 4 gestochen werden oder kann alternativ durch eine sich öffnende Klappe gesteckt werden. Der Wasserschlauch 63, welcher Teil des Schlauch-Sets 6 ist, kann ferner mit dem Filter 41 verbunden werden. Sodann kann die Klammer 17 öffnen und das Konzentrat kann in den Behälter 10 eingeführt werden. Die Klammer 17 kann nach der Befüllung des Behälters 10 schließen und Klammer 16 öffnen. Die Figur 2 zeigt eine Wasserzufuhr/Filtration über eine Druckpumpe. Klammer 18 kann geöffnet werden, um das Wasser in den Behälter abzugeben und schließt sobald die erforderliche Menge (nach Rezeptur) abgegeben wurde. Das Wasser kann in dieser Ausprägung der Erfindung über eine Druckpumpe befördert werden, um die Filtration zu ermöglichen. Die Flussmenge kann über Zeit, eine Druckpumpe und/oder einem Fluss-Sensor gesteuert werden.

Danach kann die Prozedur beispielsweise zum Befüllen eines nächsten Behälters 10 wiederholt werden. Die Klammern 16, 17 und 18 können dabei als wiederverwendbare Komponenten ausgebildet sein. Die komplette Klammersteuerung kann elektronisch über die Steuereinheit oder manuell passieren.

Der Pulverschlauch 62 kann so ausgelegt sein, dass er eine maximale Pulvermenge für die Präparierung einer Baby-Flasche bzw. eines Behälter 10 aufnehmen kann. Diese Menge kann sich aus entsprechenden Zubereitungstabellen für Babynahrung bzw. -milch ergeben. Beispielsweise kann der Schlauch dabei einen Durchmesser von 3cm bei 10cm Länge aufweisen.

An der Vorrichtung kann ferner ein Luftfilter vorgesehen sein, über welchen Luft eingebracht werden kann, mittels der die Vorrichtung von etwaigen Pulverresten befreit werden kann. Somit ist ein Durchblasen bzw. Nachpusten der Vorrichtung denkbar, bei der Pulverreste beispielsweise aus dem Schlauch 62 entfernbar sind. Denkbar wäre dies auch für den Wasserschlauch 63 bzw. dem Wasserschlauchset 6 durchzuführen um Wasserreste zu beseitigen.

Die Babymilchkonzentratquelle 11 kann als Beutel bzw. Bag mit Pulverinhalt oder als Pulvertüte ausgebildet sein und beispielsweise von den jeweiligen Babypulverherstellern bereitgestellt werden. Die Babymilchkonzentratquelle 11 kann beispielsweise mit einer Schraubkappe verschließbar sein und in einen Aufsatz 64 einstellbar sein, der konisch zulaufen kann und in dem die Einstechnadel 61 zum Entnehmen des Babymilchkonzentrats aus der Babymilchkonzentratquelle 11 vorgesehen sein kann. Ein entsprechender Aufsatz 64 kann auch zum Koppeln der Flüssigkeitsquelle 12 mit der Vorrichtung vorgesehen sein. Die Verbindung zur Zuleitung des Konzentrats aus der Babymilchkonzentratquelle 11 in den Behälter 10 kann dabei über die Einstechnadel 61 bereitgestellt sein.

Es kann ferner ein Abkochzyklus vorgesehen sein, bei dem das Wasser in der Flüssigkeitsquelle 12 und in dem Schlauch 63 und/oder in sonstigen Bereichen der Vorrichtung insbesondere automatisch in bestimmten Zeitabständen bzw. Frequenzen abgekocht wird um die Keimbelastung bzw. den Bioburden zu reduzieren. Hierdurch kann der Bioburden in dem Wasser-Schlauchset 6 und/oder in der Flüssigkeitsquelle 12 reduziert werden. Bei der Zubereitung der Babymilch ist kein Abkochen erforderlich, da der Filter 41 als Steril-Filter bzw. Virusfilter die entsprechende Sterilisierung ohne Abkochen ermöglicht. Es kann dagegen vorgesehen sein, die Flüssigkeit bzw. das Wasser lediglich auf die benötigte Babymilchtemperatur bzw. auf die Verbrauchstemperatur der Babymilch zu erhitzen.

Die Wasserzufuhr von der Flüssigkeitsquelle 12 in den Behälter 10 kann alternativ auch über ein Vakuum (Fig. 5) erfolgen bzw. beschleunigt werden. Zubereitungseinrichtung 4 mit dem verbundenen Behälter 10 kann sich mit den Schläuchen 62, 63 und 66 verbinden. Ein entsprechender Vakuum-Anschluss kann dabei an der Zubereitungseinrichtung 4 vorgesehen sein. Bei der Flüssigkeitszufuhr erfolgt die Dosierung mittels Klammern 18 und 19, wobei die Flüssigkeit gravimetrisch zugeführt wird. Klammer 18 ist geschlossen, Wasser kann bis zu dieser Klammer gefördert werden bzw. automatisch bis dorthin fließen (gravimetrisch). Klammer 19 schließt beim Erreichen der gewünschten Menge. Klammer 18 öffnet. Durch den hydrophoben Luftfilter 44, kann ein Vakuum im Behälter 10 angelegt werden. Hierdurch kann durch den Filter 41 filtriert werden. Das Volumen ergibt sich aus der Schlauchlänge und dem Schlauch-Durchmesser sowie dem Abstand der Klammern 18 und 19. Nach der Abgegebenen Menge schließt Klammer 18 und Klammer 19 öffnet. Die Prozedur kann wiederholt werden bis analog zur Rezeptur das gewünschte Wasser-Volumen, dem Behälter 10 zugefügt wurde. Die Klammer 19 kann je nach gewünschter Dosierung gemäß der Pfeilrichtung nach oben oder unten adaptiert werden bzw. positioniert werden. Das heißt eine Volumeneinstellung kann in dem Wasserschlauch 63 erfolgen. Denkbar wäre auch einen genügend großen Schlauch zu verwenden, um die maximale Wasser-Menge gemäß Zubereitungstabelle aufnehmen zu können. Optional wäre es möglich auch die Klammer 18 zu verschieben. Der Schlauch 63 bzw. das Wasser-Schlauchset 6 und die Wasserquelle 12 können als Auswechselkomponenten durch entsprechendes Auswechseln sauber gehaalten werden und deren Verkeimung kann so vermieden werden. Die komplette Klammersteuerung kann elektronisch über die Steuereinheit oder manuell passieren.

Es kann ferner vorgesehen sein, dass eine Heizdecke bzw. ein Mantel an den Behältern 10, 12 vorgesehen ist. Genauso sind jedoch davon unterschiedliche zusätzliche oder alternative Ansätze für die Erhitzung des Wassers bzw. der Babymilch denkbar. Diese können nicht an der Funktionseinheit 30 sondern direkt an den Behältern 10, 12 vorgesehen sein.

Die Erfindung ermöglicht eine Trennung von Wasser und Konzentrat im Bereich der Vorrichtung, wobei eine Zusammenführung der Komponenten erst in der Babyflasche bzw. dem Behälter 10 erfolgen kann. Hierdurch kann auf eine Reinigung verschmutzter Komponenten verzichtet werden, insbesondere dann wenn die Bag-Assemblies bzw. die Behälter 11, 12 und 6 regelmäßig ausgetauscht werden. Denkbar wäre auch den Wasserschlauch 63 zu autoklavieren, sofern er an einem Tetrapack etc. angeschlossen ist. Dies kann aber durch den Einsatz des Sterilfilters 41 und durch den regelmäßigen Austausch entsprechender Komponenten entfallen.

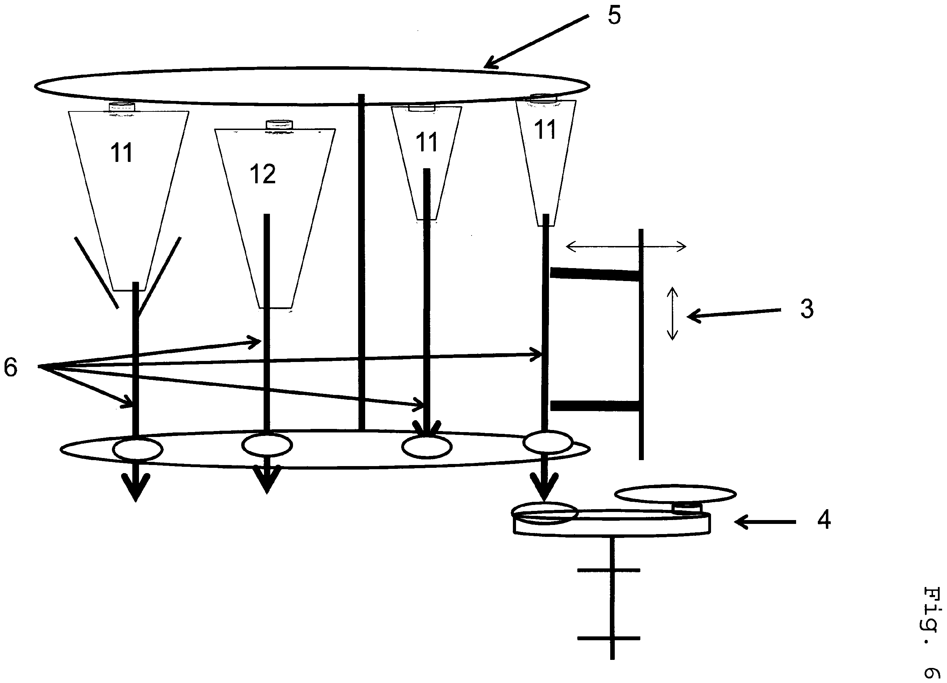

Figur 6 zeigt einen alternativen Aufbau der Erfindung. Hier können mehrere verschiedene Konzentrat- Quellen 11 in die Vorrichtung eingebracht und verarbeitet werden. Diese können zum Beispiel Baby-Tee, Apfelsaft etc. enthalten. Denkbar ist auch die Flüssigkeitsquelle hier zu integrieren. Auf diese Weise könnten bei der Dosierungseinheit 3 ein Klammer-Set zum Beispiel die Klammern 18 und 19 gespart werden.

Der drehbare Einsatz 5 kann je nach Bedarf, die Konzentratquelle 11 mit dem Dosierungs-System 3 in Kontakt bringen. Denkbar ist, dass das Dosierungssystem 3 an die Schläuche 62, 63 herangefahren werden kann und nach erfolgter Dosierung von den Schläuchen 62, 63 weggefahren werden kann, um die Drehung des Einsatzes 5 zu ermöglichen. Alternative Ausgestaltungen wären denkbar.

Je nach Konzentrat würde die Heizeinheit einschalten oder nicht. Die Information über beispielsweise die Heizdauer könnte über die Angaben auf der Konzentrat-Verpackung kommen (Einscannen) oder manuell eingegeben werden. Auch die Aufbereitung lediglich von Wasser ist möglich, worunter beispielsweise die SterilFiltration bzw. Aufbereitung durch ein Wasseraufbereitungs-Modul fällt.

In gemäß dem Stand der Technik ausgeführten Maschinen findet die Mischung bzw. Zubereitung der Babymilch im System selber statt, daher müssen diese Systeme aufwendig mit Chemikalien etc. gereinigt werden, da Babymilch (Pulver bzw. Konzentrat zusammen mit Milch) optimalen Nährboden für Keime bietet. Chemikalien in Verbindung mit Babys sind dabei als bedenklich einzustufen, insbesondere als das Reinigungssystem Fehlfunktionen aufweisen kann. Dazu kommt, dass die notwendigen Reinigungen viel Zeit in Anspruch nehmen. Vorteilhafterweise ist mit der Erfindung ferner eine andernfalls regelmäßig erforderlich Entkalkung ebenfalls nicht mehr notwendig. Darüber hinaus bietet die Erfindung die Möglichkeit, jegliche Babymilchpulver, die im Handel erhältlich sind, zu verwenden.

Die Erfindung bietet ferner vorteilhafte Zeitersparnisse bei Nutzung der Vorrichtung. Aus dem Stand der Technik bekannte Systeme müssen das verwendete Wasser abkochen, was je nach Kalkgehalt von 2-3 bis zu 5 Minuten dauern kann, da Keime abgetötet werden müssen. Danach muss das Wasser abgekühlt werden, um zu vermeiden, dass Vitamine oder Proteine zerstört werden. Diese sind hitzeempfindlich. Durch den Einsatz eines Sterilfilters 41, der regelmäßig autoklaviert wird, muss das Wasser nicht gekocht werden und die entsprechende Abkühlung entfällt auch. Eine Erhitzung lediglich auf die notwendige Temperatur bzw. Verzehrtemperatur reicht aus. Der Filter 41 hält alle Keime wie z.B. Legionellen zurück etc. Denkbar ist auch der Einsatz eines Virusfilters.

Die Zubereitungseinrichtung 4 kreiert ein geschlossenes System mit der Babyflasche 10, hierdurch kann die Babyflasche am Dispenser gelagert werden. Kontaminationen z.B. durch Luftkeime wie Schimmelpilze etc. sind ausgeschlossen. Eine Sterilisation wäre hier vergebens. Auf diese Weise lässt sich eine Fernbedienung beispielsweise einer automatischen Befüllung ohne Risiko realisieren. Durch dieses System mit entsprechender Zubereitungseinrichtung 4werden auch Kontaminationen z.B. durch Anfassen etc. auf der Steril-Seite des Filters 41 vermieden. Zubereitungseinrichtung 4 und Babyflasche 10 werden direkt nach dem Autoklavieren/Sterilisieren miteinander verbunden. Ferner wird es durch das Koppeln des Behälters 10 bzw. der Babyflasche 10 mit der Vorrichtung über die Zubereitungseinrichtung 4 ermöglicht, die Zubereitung der Babynahrung innerhalb des Behälters 10 durchzuführen.

Die aus dem Stand der Technik bekannten Systeme sind groß und nehmen im Verkaufsladen viel Platz in Anspruch. Das vorliegende System kann durch die Verwendung von Bags, Schlauchassemblies und einer aufziehbaren Folie 21 in seiner räumlichen Ausdehnung minimiert werden. Die Folie 21 kann dabei das Gehäuse darstellen, in dem die Bags sitzen sowie die Mechanik bzw. die Komponenten oder ein Teil der Komponenten der Vorrichtung untergebracht sind. Die Erfindung ermöglicht somit eine optimale und schnelle Mischung bzw. Zubereitung der Babymilch, wobei kein anderes System einen Rührer verwendet. Durch einen Rührer kann in vorteilhafter Ausbildung unerwünschte Luftblasenbildung verhindert bzw. minimiert werden.

Die Pulverdosierung kann mit einer kostengünstigen Dosierungseinheit erfolgen, was ein Wegwerfkonzept ermöglicht. Die klassischen Dosierungen über Schenken oder Kammern sind alternativ oder zusätzlich weiterhin anwendbar. Auch ist bei entsprechender Vernetzung die Funktion einer automatischen Nachbestellung von Zutaten oder Komponenten denkbar. Hierzu kann eine Wägezelle genutzt werden oder es kann durch einfaches Zählen beispielsweise der Füllungen der Schläuche 6 ermittelt werden, ob eine Nachbestellung sinnvoll ist. Hierbei kann selbstverständlich die jeweils geltende Dosierungseinstellung würde berücksichtigt werden.

Aus dem Stand der Technik ist kein System bekannt, das verschiedene Konzentrate verarbeiten kann insbesondre keines, das die unerwünschte Mischung von verschiedenen Konzentraten verhindert. Durch die einzelnen Schlauchsysteme ist dies bei dieser Erfindung möglich.

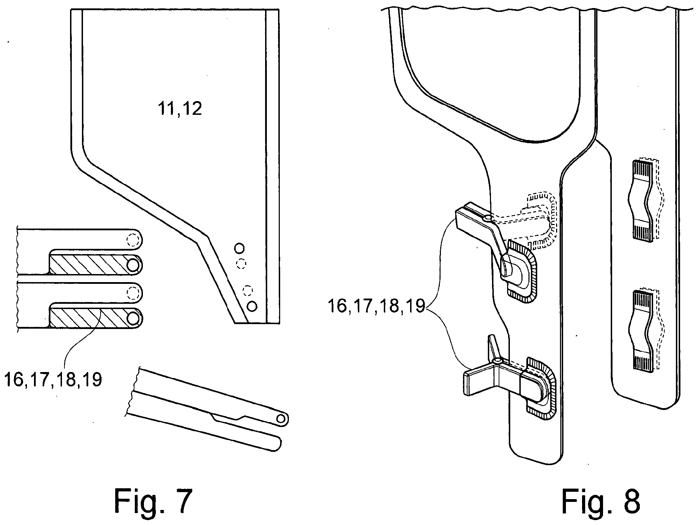

Figur 7 zeigt einen Behälter, der als Babynahrungskonzentratquelle 11 und/oder als Flüssigkeitsquelle 12 verwendbar ist. Der Behälter weist wenigstens zwei Bereiche mit unterschiedlichen Querschnitten auf. Wenigstens einer der Bereiche kann wenigstens teilweise trichterförmig ausgebildet sein, um das Herausfließen/Herausrieseln bzw. Herunterfließen/Herunterrieseln von darin enthaltenen Substanzen zu vereinfachen. Ein oberer Bereich kann größer als ein unterer Bereich ausgebildet sein, wobei an dem kleineren, unteren Bereich eine Öffnung zum Entleeren des Behälters vorgesehen sein kann. Der untere Bereich kann als eine im Behälter integrierte Dosierleitung dienen, innerhalb welcher mittels der Klammern 16, 17, 18, 19 die Dosierung des zum Zubereiten von Babynahrung oder sonstiger Erzeugnisse erforderlichen Inhalts erfolgen kann. Dieser als Dosierleitung bezeichnete Abschnitt kann dem weiter oben beschriebenen Schlauch zum Leiten der jeweiligen Inhalte entsprechen. Die Dosierleitung kann entsprechend des maximalen Volumens der herstellbaren Portionen dimensioniert sein, und/oder einen Verschluss zum einfachen Öffnen des Behälters umfassen.

Der Behälter kann aus einer mit sich selbst oder mehreren miteinander und/oder mit sich selbst verschweißten Folien oder sonstigen Komponenten gefertigt sein. Er kann ferner als Verbrauchsmaterial ausgebildet sein, welches nach dessen Entleerung aus der Vorrichtung entfernt und durch einen neuen Behälter ersetzt wird.

Am oder im Behälter können magnetische bzw. metallische Komponenten vorgesehen sein, die mit an den Klammern 16, 17, 18, 19 vorgesehenen Magneten wechselwirken können. Durch die Wechselwirkung ist es möglich, den Behälter in demjenigen Bereich mittels der Klammern 16, 17, 18, 19 auseinanderzuziehen, in dem der Magnet einer Klammer 16, 17, 18, 19 an der metallischen Komponente des Behälters haftet. Die metallischen Komponenten können hierbei versetzt zueinander und/oder an gegenüberliegenden Seiten des Behälters vorgesehen sein. Entsprechend können die Magnete der Klammern 16, 17, 18, 19 ebenfalls versetzt zueinander, d.h. so angeordnet sein, dass sich die Magnete einer Klammer 16, 17, 18, 19 in einem geschlossenen Zustand der Klammer 16, 17, 18, 19 nicht oder nicht wesentlich beeinflussen, also anziehen oder abstoßen.

Alternativ oder zusätzlich können weiteren Komponenten vorgesehen sein, welche eine Wechselwirkung zwischen den Klammern 16, 17, 18, 19 und dem Behälter ermöglichen. Denkbar ist beispielsweise eine Ausführung des Behälters mit Taschen und/oder Laschen gemäß Figur 8, in welche die Klammern 16, 17, 18, 19 eingreifen können. Die darin eingelegten bzw. eingreifenden Klammern 16, 17, 18, 19 können den Behälter entsprechend im geöffneten Zustand der Klammer 16, 17, 18, 19 aufziehen und im geschlossenen Zustand der Klammern 16, 17, 18, 19 verschließen.

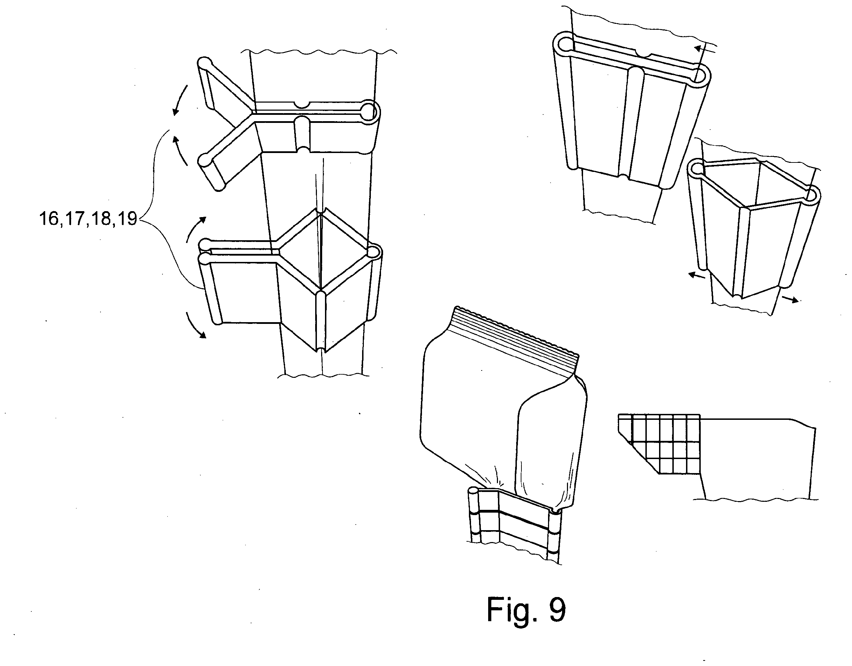

Figur 9 zeigt eine Ausführung, bei der der Behälter mittels wenigstens zweier als Klapp-Clips ausgeführter Klammern 16, 17, 18, 19 geschlossen und geöffnet werden kann. Werden mehr als zwei nebeneinander angeordneten Klapp-Clips vorgesehen, so kann auf deren Höhenverstellung verzichtet werden, da zum Portionieren lediglich ausgewählte Klapp-Clips geöffnet und andere geschlossen werden müssen.

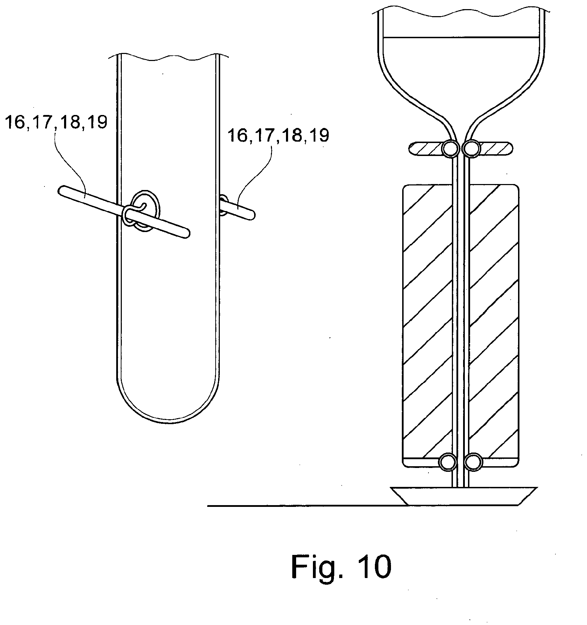

Figur 10 zeigt eine Ausführung, bei der die Klammern 16, 17, 18, 19 beispielsweise aus Metallstäben ausgebildet sind, die in an dem Behälter vorgesehenen Ösen geführt sind.

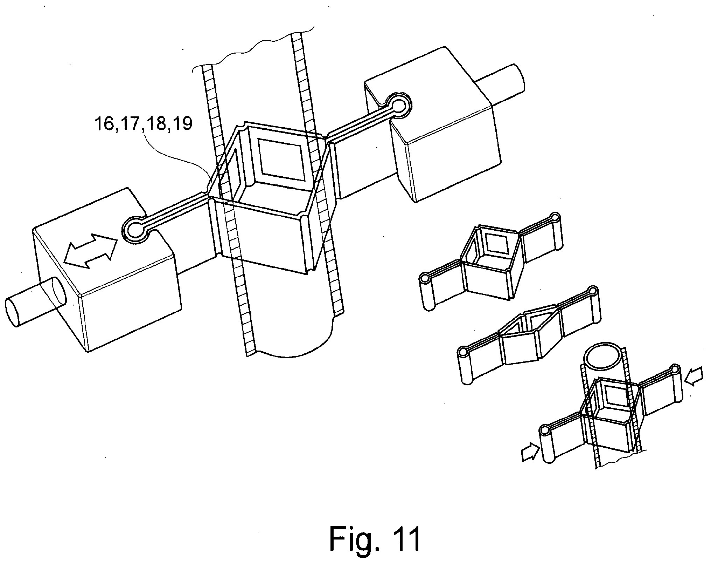

Figur 11 zeigt eine Ausführung, bei der die Klammern 16, 17, 18, 19 beispielsweise als Kunststoff-Klemmen ausgeführt sind, die wenigstens ein Filmscharnier und Klebeflächen umfassen können. Über die Klebeflächen können die Klammern 16, 17, 18, 19 mit dem Behälter zu dessen Öffnen und/oder Schließen wechselwirken. Die Klammern 16, 17, 18, 19 können hierbei mittels entsprechender Aktuatoren linear verstellbar sein. Zum Abdrücken des Behälters mittels der Klammern 16, 17, 18, 19 ist es auch denkbar, die Klammern 16, 17, 18, 19 und/oder den Behälter in einer Rotationsbewegung beispielsweise um 90° zu verdrehen.

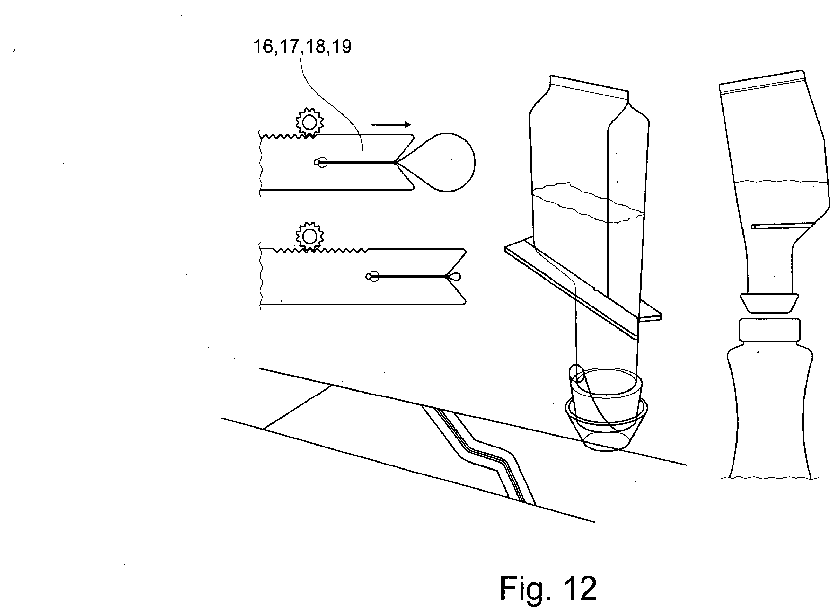

Figur 12 zeigt eine Ausführung, bei der die Klammer 16, 17, 18, 19 als Schieber ausgebildet ist, der linear bewegbar ist. Je nach linearer Position des Schiebers kann dieser den freien Schlauchquerschnitt bzw. Behälterquerschnitt verändern. In Figur 12 ist auch eine möglich Beutel- bzw. Behälterform sowie die entsprechende Beutelstanzung gezeigt, die die Herstellung des Behälters mit keinem bzw. nur geringem Verschnitt erlaubt. Die Beutelstanzung weist hierbei einen linearen Bereich auf, der über die gesamte Behälterlänge verläuft, und zwei kürzere, zum ersten Bereich parallele lineare Bereiche, die über einen insbesondere schrägen Verbindungsbereich miteinander verbunden und unterschiedlich vom ersten Bereich beabstandet sind.

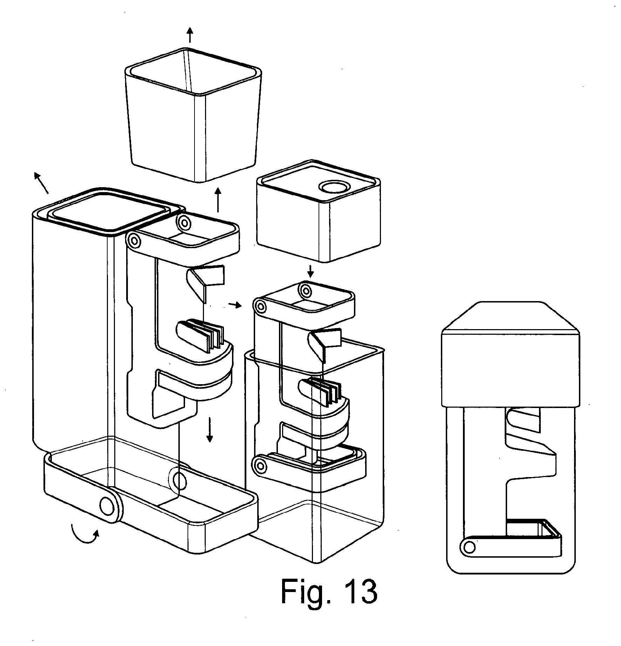

Figur 13 zeigt eine mögliche Ausgestaltung der Vorrichtung, die einfach zerlegt und zusammengebaut werden kann sowie besonders kompakt zusammenlegbar bzw. lagerbar ist. Die Vorrichtung kann hierbei einen klappbaren Standfuß umfassen, der zum Einfahren der Vorrichtung eingeklappt werden kann. Ein Tank, welcher beispielsweise die Flüssigkeitsquelle 12 der Vorrichtung sein kann, kann andere Teile der Vorrichtung zur Lagerung aufnehmen. Mittels eines Covers bzw. einer Abdeckung der Vorrichtung kann der Tank mit den darin eingelagerten weiteren Teilen der Vorrichtung verschlossen werden.

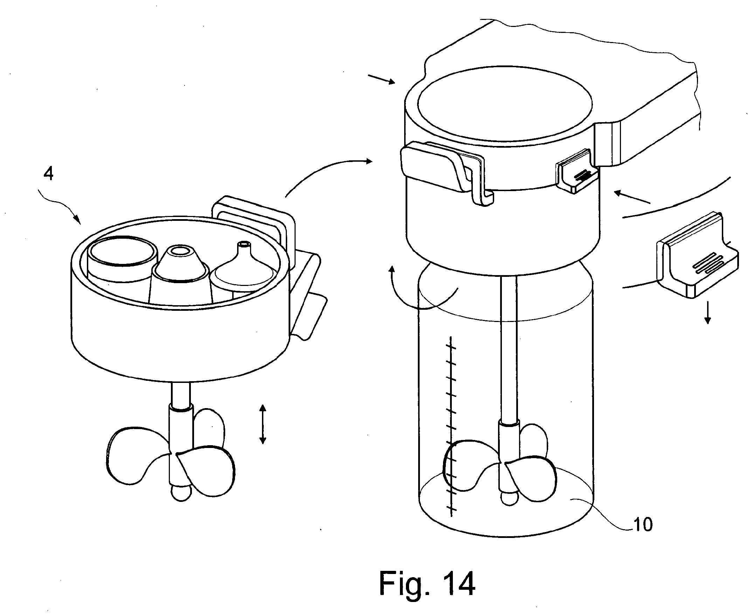

Figur 14 zeigt eine Zubereitungseinrichtung 4 mit einem Adapter, mittels dem eine Babyflasche 10 besonders einfach mit der erfindungsgemäßen Vorrichtung koppelbar ist. An der Vorrichtung kann hierzu ein insbesondere höhenverstellbarer Dockingabschnitt vorgesehen sein, an dem der Adapter beispielsweise an einem Hakenabschnitt einhängbar ist. An dem Dockingabschnitt kann ferner wenigstens ein Knopf zum Trennen einer Verbindung zwischen dem Adapter und dem Dockingabschnit vorgesehen sein.

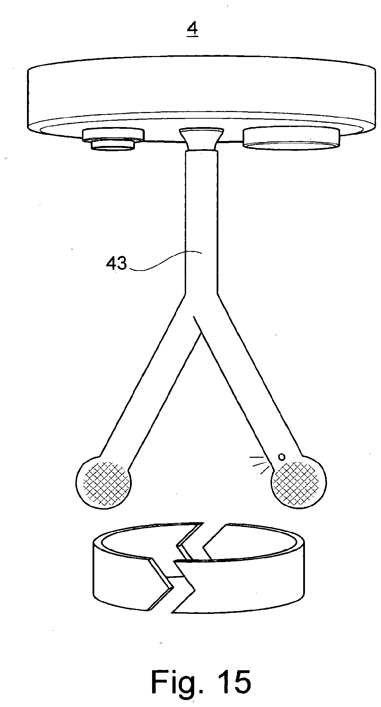

Figur 15 zeigt eine mögliche Ausgestaltung der Zubereitungseinrichtung 4, bei der der Rührer 43 einen oder mehrere Sprayballs bzw. Sprühköpfe umfassen kann. Dabei ist es denkbar, dass Flüssigkeit über den Rührer 43 und insbesondere über die am Rührer vorgesehenen Sprayballs in die Babyflasche 10 oder einen sonstigen Behälter eingeleitet wird. Die Zubereitungseinrichtung 4 kann damit auch zum Reinigen insbesondere des Innenraums der Babyflasche 10 genutzt werde. Hierzu muss die Zubereitungseinrichtung 4 mit daran vorgesehener Babyflasche mit einer entsprechenden Reinigungsvorrichtung gekoppelt werden. Wird von der Reinigungsvorrichtung Reinigungsflüssigkeit in die Sprühköpfe eingeleitet, so bewirkt dies das Reinigen der an der Zubereitungseinrichtung 4 vorgesehenen Babyflasche.

Es ist möglich, den Rührer 43 drehbar relativ zum weiteren Gefüge der Zubereitungseinrichtung 4 auszugestalten, sodass der Rührer 43 mechanisch und/oder durch den Fluidfluss durch den Sprayball oder die Sprayballs zum Drehen angetrieben wird.

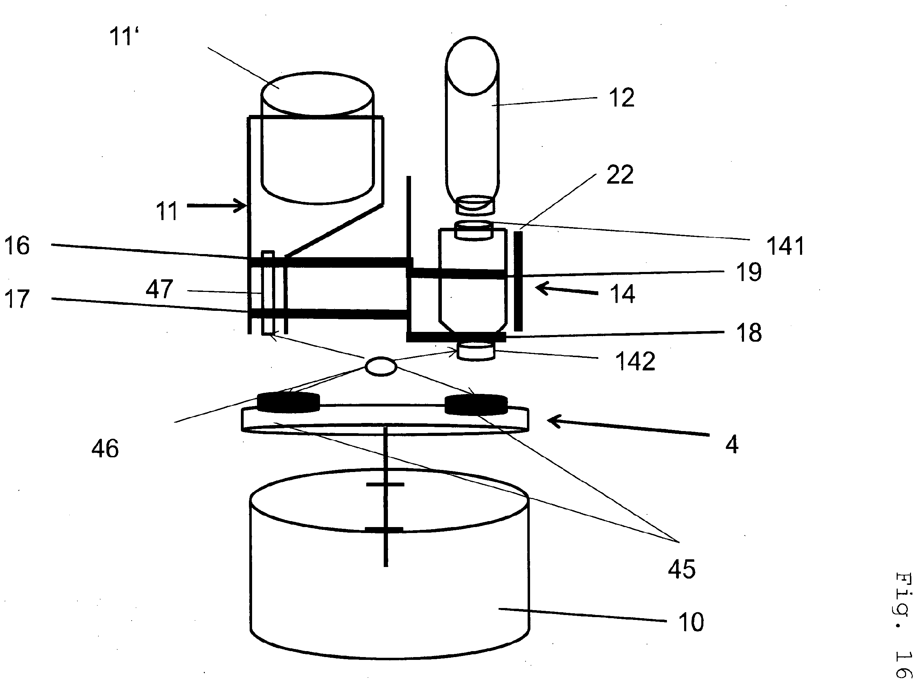

Figur 16 zeigt eine Ausführung der Vorrichtung, bei der die Flüssigkeitsquelle 12 als Tetra Pak, Wasserflasche oder als sonstiger Behälter ausgebildet ist. Der Behälter kann mit der Vorrichtung gemeinsam und/oder separat gekauft werde. Die Flüssigkeitsquelle 12 ist mit einem Dosier- und Sterilisations-Beutel 14 koppelbar, der im eingebauten Zustand in der Vorrichtung unterhalb der Flüssigkeitsquelle 12 angeordnet sein kann. Flüssigkeit kann so besonders einfach und ohne Notwendigkeit oder Vorhandensein einer Pumpe von der Flüssigkeitsquelle 12 der Schwerkraft folgend in den Dosier- und Sterilisations-Beutel 14 fliesen. Hierzu können die Klammern 18, 19 entsprechend am Dosier- und Sterilisations-Beutel 14 eingestellt werden. In diesem Sinne kann der Dosier- und Sterilisationsbeutel 14 dem Schlauch oder Schlauchabschnitt gemäß Anspruch 1 entsprechen, der mit der Dosierungseinrichtung zum Dosieren von dessen Inhalt wechselwirken kann. Ein entsprechender Dosier- und Sterilisations-Beutel 14 kann dementsprechend auch zum Dosieren und/oder zum Sterilisieren des Babynahrungskonzentrats verwendet werden. Der Beutel 14 kann konisch zulaufen, wodurch der Durchfluss von Konzentrat bzw. von Flüssigkeit durch den Beutel optimiert bzw. erleichtert wird.

Der Dosier- und Sterilisations-Beutel 14 umfasst ein Gewinde 141 bzw. einen sonstigen ersten Anschluss 141 zum Koppeln des Beutels 14 mit der Flüssigkeitsquelle 12. Der Beutel 14 kann damit mit der Flüssigkeitsquelle 12 beispielsweise verschraub werden. Der erste Anschluss 141 ist in einem oberen Bereich des Beutels 14 vorgesehen. In einem unteren Bereich des Beutels 14 kann eine Öffnungsklappe bzw. ein Verschluss vorgesehen sein. In dem unteren Bereich des Beutels 14 ist ein weiterer Anschluss 142 vorgesehen, der das Auslaufen von Flüssigkeit verhindert, während beispielsweise ein Tetra Pak-Behälter und der damit verbundener Dosier- und Sterilisations-Beutel 14 in die Vorrichtung eingelegt bzw. positioniert werden.

Über den unteren Anschluss 142 kann der Beutel 14 und/oder die Babynahrungskonzentratquelle 11 mit der Zubereitungseinrichtung 4 und darüber weiter mit der Babyflasche 10 gekoppelt werden. Hierzu können an der Zubereitungseinrichtung 4 Einlassklappen 45 vorgesehen sein. Die Zubereitungseinrichtung 4 kann ferner einen Rührer 43 mit wenigstens einem der oben genannten Sprayballs umfassen, welcher insbesondere zum Reinigen der Vorrichtung bzw. der Zubereitungseinrichtung 4 sowie weiterer Komponenten der Vorrichtung in einer Reinigungseinrichtung dienen kann.

Im Bereich zwischen der Flüssigkeitsquelle 12 und der Babyflasche 10 kann ferner eine UV-Lichtquelle 46 vorgesehen sein, die zur Sterilisation der Ein- und/oder Auslässe, der Leitungen bzw. der in der Vorrichtung enthaltenen Substanzen eingerichtet ist. Mittels der verstellbaren Klammern 18, 19 ist es möglich, die Flüssigkeit aus der Flüssigkeitsquelle 12 innerhalb des Beutels 14 zu dosieren. Die Klammern können hierzu derart ausgebildet sein, dass sie ein steriles bzw. teilweise oder zeitweise steriles Abklemmen des Beutels 14 ermöglichen. Dabei können die Klammern 18, 19 den Beutel 14 oder Teile des Beutels 14 beispielsweise so verengen, dass ein Fluiddurchfluss durch den von den Klammern 18, 19 abgeklemmten Bereich verhindert wird, und damit auch das Eindringen von Keimen erschwert oder unmöglich gemacht wird. Eine Heiz- und/oder Kühl-Platte bzw. ein entsprechendes Element 22 kann im Bereich des Dosier- und Sterilisations-Beutels 14 vorgesehen sein, und dazu ausgebildet sein, sich im Dosier-und Sterilisations-Beutel 14 befindliche bzw. dosierte Flüssigkeiten zu erhitzen und damit zu sterilisieren sowie ggf. abzukühlen. Der Beutel 14 ist hierzu aus entsprechend hitzeresistentem Material gefertigt.

Nach erfolgter Zubereitung der Babynahrung bzw. nach Zuleitung der sterilisierten und/oder erwärmten Flüssigkeit in die Babyflasche 10 kann der Beutel 14 wieder mit Flüssigkeit gefüllt werden und es kann eine weitere Sterilisation der darin enthaltenen Flüssigkeit durch Erhitzung erfolgen. Die Sterilisation kann mehr als einen Abkoch Zyklus umfasse. Die Klammern 18, 19 schließen den Beutel 14 bzw. Teile des Beutels 14 bzw. den mit dem Beutel 14 verbundenen Schlauch während der Sterilisation steril ab und ermöglichen dadurch ferner das sterile Lagern der sterilisierten Flüssigkeit. Die sterilisierte Flüssigkeit muss so bei einer nachfolgenden Zubereitung lediglich auf Trinktemperatur erwärmt werden. Ein erneutes Erhitzen zur Sterilisation und Abkühlen auf Trinktemperatur kann so entfallen, was zu erheblichen Zeiteinsparungen bei der Nahrungsmittelzubereitung führt.

Die Babynahrungskonzentratquelle 11 kann wie in Figur 5 gezeigt, ebenfalls über Klammern 16, 17 zur Dosierung des Babynahrungskonzentrats genutzt werden. Hierzu kann ggf. innerhalb der Babynahrungskonzentratquelle 11 eine weitere Babypulver-Verpackung 11' vorgesehen sein. An dem Behälter der Babynahrungskonzentratquelle 11 und/oder an dem Dosier- und Sterilisations-Beutel 14 können die in den Figuren 7 bis 12 beschriebenen Einrichtungen zu Dosierung der jeweiligen Inhalte vorgesehen sein. Unter anderem können beispielsweis Magnetelemente oder metallische Element in oder an den jeweiligen Behältern vorgesehen sein, welche mit den jeweiligen magnetisch ausgeführten Klammern wechselwirken können. Der Magnet oder die Magnete können auch als Magnetband 47 ausgeführt sein.

Die Klammern bzw. Dosierklammen 16, 17, 18, 19 der Flüssigkeitsquelle 12 und ggf. der Babynahrungskonzentratquelle 11 können dazu ausgebildet sein, den Dosier- und Sterilisations-Beutel 14 steril zu verschließen.

## Patentansprüche

1. Vorrichtung zur Dosierung und Zubereitung von Babynahrung, insbesondere von Babymilch, mit
wenigstens einem ersten Anschluss (1) zum Verbinden mit wenigstens einer Babynahrungskonzentratquelle (11),
einem zweiten Anschluss (2) zum Verbinden mit wenigstens einer Flüssigkeitsquelle (12), insbesondere einer Wasserquelle, insbesondere wenigstens einer Heizeinrichtung (3), und
wenigstens einem Auslass zum Einfüllen eines Babynahrungskonzentrats und/oder der Flüssigkeit in eine Babyflasche (10),
wobei wenigstens ein erster als Wegwerfartikel ausgebildeter Beutel und/oder Beutel-Schlauch-Set und/oder Schlauch-Set (6) und/oder Schlauch (62, 63) oder Schlauchabschnitt zum Aufbewahren und/oder Leiten des Babynahrungskonzentrats vorgesehen ist,
**dadurch gekennzeichnet,**
**dass** wenigstens eine Zubereitungseinrichtung zum Zubereiten der Babynahrung aus der Flüssigkeit und dem Babynahrungskonzentrat vorgesehen ist,
**dass** wenigstens ein zweiter als Wegwerfartikel ausgebildeter Beutel und/oder Beutel-Schlauch-Set und/oder Schlauch-Set (6) und/oder Schlauch (62, 63) oder Schlauchabschnitt zum Aufbewahren und/oder Leiten der Flüssigkeit vorgesehen ist,
**dass** eine Dosierungseinrichtung vorgesehen ist, die zum Dosieren des Konzentrats und/oder der Flüssigkeit ausgebildet ist, und
**dass** die Dosierungseinrichtung
- wenigstens eine an dem ersten Schlauch (62, 63) oder Schlauchabschnitt verschieblich angeordnete erste Klammer (16, 17) und/oder eine Förderschnecke oder ein Rad zur Realisierung verschiedener Dosierungen des Babynahrungskonzentrats und
- wenigstens zwei an dem zweiten Schlauch (62, 63) oder Schlauchabschnitt angeordnete zweite Klammern (18, 19) umfasst,
wobei die Flüssigkeit gravimetrisch zu den zweiten Klammern (18, 19) befördert wird.

2. Vorrichtung nach Anspruch 1 , **dadurch gekennzeichnet, dass** die Vorrichtung wenigstens eine Heizeinrichtung (3) umfasst, und dass die Heizeinrichtung (3) dazu eingerichtet ist, die Flüssigkeit und/oder die Babynahrung zu erwärmen und/oder zu sterilisieren.

3. Vorrichtung nach Anspruch 1 oder 2, **dadurch gekennzeichnet, dass** die Babynahrungskonzentratquelle (11) und/oder die Flüssigkeitsquelle (12) und/oder die Babyflasche (10) auswechselbare Bestandteile der Vorrichtung sind und/oder aus einem Beutel und/oder einem kombinierten Beutel- und Schlauch-Set (6) bestehen, die einen geringen Stauraum benötigen.

4. Vorrichtung nach einem der vorhergehenden Ansprüche, **dadurch gekennzeichnet, dass** wenigstens ein Filter (41) zum Reinigen und/oder Sterilisieren der Flüssigkeit, insbesondere des Wassers vorgesehen ist und/oder
dass die Vorrichtung Mittel, insbesondere einen Scanner zum Einlesen von Informationen der Babynahrungskonzentratquelle (11) aufweist und/oder
dass ein Babyflaschen-Aufsatz zum Koppeln der Babyflasche (10) mit der Vorrichtung vorgesehen ist.

5. Vorrichtung nach einem der vorhergehenden Ansprüche, **dadurch gekennzeichnet, dass** die Zubereitungseinrichtung (4) wenigstens einen Rührer (43) und/oder wenigstens eine Sprühdüse und/oder wenigstens einen Sprayball umfasst und/oder dass die Zubereitungseinrichtung (4) als auswechselbares Verbrauchsteil ausgebildet ist.

6. Vorrichtung nach einem der vorhergehenden Ansprüche, **dadurch gekennzeichnet, dass** die Zubereitungseinrichtung (4) so mit der Babyflasche (10) bzw. mit dem ersten und zweiten Beutel und/oder Beutel-Schlauch-Set und/oder Schlauch-Set (6) und/oder Schlauch (62, 63) oder Schlauchabschnitt der Vorrichtung koppelbar ist, dass Babymilchkonzentrat und Wasser noch getrennt voneinander in die Babyflasche (10) eingefüllt werden und die Zubereitung der Babymilch bzw. Vermengung von Babymilchkonzentrat und Wasser erst nach dem Einfüllen der einzelnen Komponenten in die Babyflasche (10) und innerhalb der Babyflasche (10) erfolgt, und/oder
dass verschiedene Babynahrungskonzentratquellen so getrennt angeschlossen werden können, dass keine Mischung der verschiedenen Konzentrate erfolgt.

7. Vorrichtung nach einem der vorhergehenden Ansprüche, **dadurch gekennzeichnet, dass** eine Steuerungs-/Regelungseinrichtung vorgesehen ist, mittels der die Vorrichtung bedienbar, insbesondere fernbedienbar ist.

8. Verwendung einer Vorrichtung gemäß einem der Ansprüche 1 bis 7 zur Zubereitung von Babynahrung, insbesondere von Babymilch.

9. Verwendung eines mit Babynahrungskonzentrat gefüllten Beutels und/oder Beutel-Schlauch-Sets als Babynahrungskonzentratquelle (11) in einer Vorrichtung gemäß einem der Ansprüche 1 bis 7 zur Zubereitung von Babynahrung, insbesondere von Babymilch.

10. Verwendung nach Anspruch 9, wobei am oder im Beutel (14) und/oder Beutel-Schlauch-Set magnetische bzw. metallische Komponenten vorgesehen sind, die mit an den Klammern (16, 17, 18, 19) vorgesehenen Magneten wechselwirken können, um den Beutel (14) und/oder das Beutel-Schlauch-Set in demjenigen Bereich mittels der Klammern (16, 17, 18, 19) auseinanderzuziehen.

11. Dosier- und/oder Sterilisations-Beutel (14) zur Verwendung als auswechselbarer bzw. als Wegwerfartikel ausgebildeter Beutel (14) und/oder Beutel-Schlauch-Set in einer Vorrichtung gemäß einem der Ansprüche 1 bis 7, **dadurch gekennzeichnet,**
**dass** der Dosier- und/oder Sterilisations-Beutel (14) wenigstens zwei Anschlüsse (141, 142) zum Zu- und Ableiten einer Flüssigkeit oder eines Konzentrats umfasst, und
**dass** ein erster Anschluss (141) in einem oberen Bereich des Beutels (14) und/oder Beutel-Schlauch-Sets vorgesehen ist und dass ein zweiter Anschluss (142) an einem unteren Bereich des Beutels (14) und/oder Beutel-Schlauch-Sets vorgesehen ist, wobei die Flüssigkeit oder das Konzentrat gravimetrisch gefördert werden kann, und dass der Dosier- und/oder Sterilisations-Beutel (14) aus hitzeresistentem Material gefertigt ist.

12. Dosier- und/oder Sterilisations-Beutel (14) nach Anspruch 11, wobei am oder im Beutel (14) und/oder Beutel-Schlauch-Set magnetische bzw. metallische Komponenten vorgesehen sind, die mit an den Klammern (16, 17, 18, 19) vorgesehenen Magneten wechselwirken können, um den Beutel (14) und/oder das Beutel-Schlauch-Set in demjenigen Bereich mittels der Klammern (16, 17, 18, 19) auseinanderzuziehen.

13. Dosier- und/oder Sterilisations-Beutel gemäß Anspruch 11 oder 12, mit einer daran angeschlossenen Flüssigkeitsquelle.

14. Zubereitungseinrichtung (4) für eine Vorrichtung nach einem der Ansprüche 1 bis 7, **dadurch gekennzeichnet,**
**dass** die Zubereitungseinrichtung (4) mit einem Behälter (10) koppelbar ist und einen Rührer (43) umfasst, der zum Rühren des Inhalts des mit ihr gekoppeltem Behälters (10) ausgebildet ist, wobei vorzugsweise der Rührer (43) einen oder mehrere Sprayballs umfasst, und
**dass** die Zubereitungseinrichtung (4) einen Adapter umfasst, welcher zum Koppeln des Behälters (10) mit der Vorrichtung ausgestaltet ist, und dass der Adapter ausgestaltet ist, um an einem Hakenabschnitt eines höhenverstellbaren Dockingabschnitts der Vorrichtung einhängbar zu sein.

15. Zubereitungseinrichtung (4) nach Anspruch 14, **dadurch gekennzeichnet,**
**dass** die Zubereitungseinrichtung (4) als auswechselbares Verbrauchsteil ausgebildet ist und/oder das Vermischen des Babynahrungskonzentrats mit der Flüssigkeit bzw. das Lösen des Babynahrungskonzentrats in der Flüssigkeit bewirkt.

## Claims

1. Device for dispensing and preparing baby food, in particular baby milk, with
at least one first connector (1) for connecting to at least one source of baby food concentrate (11), a second connector (2) for connecting to at least one source of liquid (12), in particular to a source of water, in particular at least one heating device (3), and
at least one outlet for filling a baby food concentrate and/or the liquid into a baby bottle (10), wherein at least one first disposable bag and/or bag and tube set and/or tube set (6) and/or tube (62, 63) or tube section is provided for storing and/or conducting the baby food concentrate,
**characterized in**
**that** at least one preparation device is provided for preparing the baby food from the liquid and the baby food concentrate,
**that** at least one second disposable bag and/or bag and tube set and/or tube set (6) and/or tube (62, 63) or tube section is provided for storing and/or conducting the liquid,
**that** a metering device is provided that is configured for metering the concentrate and/or the liquid, and that the metering device
- comprises at least one first clamp (16, 17) displaceably arranged on the first tube (62, 63) or tube section and/or a conveying screw or a wheel for metering different quantities of the baby food concentrate, and
- at least two second clamps (18, 19) arranged on the second tube (62, 63) or tube section,
whereby the liquid is conveyed gravimetrically to the second clamps (18, 19).

2. A device according to Claim 1, **characterized in that** the device comprises at least one heating device (3), and that the heating device (3) is configured to heat and/or sterilize the liquid and/or the baby food.

3. A device according to Claim 1 or Claim 2, **characterized in that** the source of baby food concentrate (11) and/or the source of liquid (12) and/or the baby bottle (10) are replaceable components of the device and/or comprise a bag or a combined bag and tube kit (6) that require a small storage space.

4. A device according to one of the preceding claims, **characterized in that** at least one filter (41) is provided for cleaning and/or sterilizing the liquid, in particular the water, and/or that the device has means, in particular a scanner, for reading information on the source of the baby food concentrate (11), and/or
that a baby bottle attachment is provided for coupling the baby bottle (10) to the device.

5. A device according to one of the preceding claims, **characterized in that** the preparation device (4) comprises at least one agitator (43) and/or at least one spray nozzle and/or at least one spray ball, and/or that the preparation device (4) is configured as a replaceable wear part.

6. A device according to one of the preceding claims, **characterized in that** the preparation device (4) can be coupled to the baby bottle (10) or to the first and second bag and/or bag and tube set and/or tube set (6) and/or tube (62/63) or tube section of the device in such a way that the baby bottle (10) is filled with baby milk concentrate and water still separately from one another and that the preparation of the baby milk or mixing of the baby milk concentrate and water takes place only after filling the individual components into the baby bottle (10) and within the baby bottle (10), and/or
that different sources of baby food concentrate can be connected separately from one another such that no mixing of the different concentrates takes place.

7. A device according to one of the preceding claims, **characterized in that** a control/regulation device is provided by means of which the device can be operated, in particular remotely controlled.

8. Use of a device according to one of Claims 1 to 7 for preparing baby food, in particular baby milk.

9. Use of a bag and/or a bag and tube set filled with baby food concentrate as a source of baby food concentrate (11) in a device according to one of Claims 1 to 7 for preparing baby food, in particular baby milk.

10. Use according to Claim 9, wherein magnetic or metallic components are provided on or in the bag (14) and/or bag and tube set which can interact with magnets provided on the clamps (16, 17, 18, 19) to pull the bag (14) and/or bag and tube set apart in that area by means of the clamps (16, 17, 18, 19).

11. A metering and/or sterilizing bag (14) for use as a replaceable or dispensable bag (14) and/or bag and tube set in a device according to one of Claims 1 to 7, **characterized in that** the metering and/or sterilizing bag (14) comprises at least two connections (141, 142) for the supply and discharge of a liquid or a concentrate, and
that a first connection (141) is provided in an upper area of the bag (14) and/or bag and tube set, and that a second connection (142) is provided in a lower area of the bag (14) and/or bag and tube set, wherein the liquid or concentrate is capable of being conveyed gravimetrically, and that the metering and/or sterilizing bag (14) is made of heat-resistant material.

12. A metering and/or sterilizing bag (14) according to Claim 11, wherein magnetic or metallic components are provided on or in the bag (14) and/or bag and tube set which can interact with magnets provided on the clamps (16, 17, 18, 19) to pull the bag (14) and/or bag and tube set apart in that area by means of the clamps (16, 17, 18, 19).

13. A metering and/or sterilizing bag according to Claim 11 or Claim 12 with a connected source of liquid.

14. A preparation device (4) for a device according to one of Claims 1 to 7, **characterized in that** the preparation device (4) can be coupled to a container (10) and comprises an agitator (43) configured to stir the contents of the container (10) coupled thereto, wherein the agitator (43) preferably comprises one or more spray balls, and
that the preparation device (4) comprises an adapter configured to couple the container (10) to the device, and that the agitator is configured to be attachable to a hook section of a height adjustable docking section of the device.

15. A preparation device (4) according to Claim 14, **characterized in that**
the preparation device (4) is configured as a replaceable wear part and/or effects the mixing of the baby food concentrate with the liquid or the dissolving of the baby food concentrate in the liquid.

## Revendications

1. Dispositif de dosage et de préparation de nourriture pour bébés, notamment de lait infantile, comportant
au moins un premier raccord (1) à relier à au moins une source de concentré de nourriture pour bébés (11),
un deuxième raccord (2) à relier à au moins une source de liquide (12), notamment une source d'eau,
notamment au moins un dispositif chauffant (3), et
au moins un orifice pour verser un concentré de nourriture pour bébés et/ou le liquide dans un biberon (10),
sur lequel est prévu au moins un premier sachet conçu comme article jetable et/ou un set sachet-flexible et/ou un set de flexibles (6) et/ou un flexible (62, 63) ou une section de flexible pour conserver et/ou amener le concentré de nourriture pour bébés,
**caractérisé en ce**
**qu'**au moins un dispositif de préparation est prévu pour la préparation de nourriture pour bébés à partir du liquide et du concentré de nourriture pour bébés,
**qu'**au moins un deuxième sachet conçu comme article jetable et/ou un set sachet-flexible et/ou un set de flexibles (6) et/ou un flexible (62, 63) ou une section de flexible est prévu/e pour conserver et/ou amener le liquide,
**qu'**un dispositif de dosage est prévu et conçu pour le dosage du concentré et/ou du liquide, et que ce dispositif de dosage
- comprend au moins une première pince (16, 17) disposée de manière mobile sur le premier flexible (62, 63) ou la section de flexible et/ou une vis sans fin ou une roue pour réaliser différents dosages du concentré de nourriture pour bébés et
- au moins deux deuxièmes pinces (18, 19) disposées sur le deuxième flexible (62, 63) ou la section de flexible,
le liquide étant acheminé gravimétriquement aux deuxièmes pinces (18, 19).

2. Dispositif selon revendication n° 1, **caractérisé en ce que** le dispositif comprend au moins un dispositif chauffant (3) et que ce dispositif chauffant (3) est configuré pour chauffer et/ou stériliser le liquide et/ou la nourriture pour bébés.

3. Dispositif conforme à la revendication n° 1 ou 2 **caractérisé en ce que** la source de concentré de nourriture pour bébés (11) et/ou la source de liquide (12) et/ou le biberon (10) sont des éléments constitutifs du dispositif qui sont remplaçables et/ou sont constitués d'un sachet et/ou d'un set combiné sachet et flexible (6) qui sont peu encombrants.

4. Dispositif conforme à l'une des revendications précédentes, **caractérisé en ce qu'**au moins un filtre (41) est prévu pour le nettoyage et/ou la stérilisation du liquide, notamment de l'eau et/ou
que ce dispositif présente certains équipements, notamment un scanner pour lire des informations concernant la source de concentré de nourriture pour bébés (11) et/ou
qu'un embout de biberon est prévu pour accoupler le biberon (10) au dispositif.

5. Dispositif conforme à l'une des revendications précédentes, **caractérisé en ce que** le dispositif de préparation (4) comprend au moins un agitateur (43) et/ou au moins une buse pulvérisatrice et/ou au moins une boule de pulvérisation et/ou que le dispositif de préparation (4) est conçu en tant qu'élément consommable remplaçable.

6. Dispositif conforme à l'une des revendications précédentes, **caractérisé en ce que** le dispositif de préparation (4) est accouplable au biberon (10) ou aux premier et deuxième sachets et/ou au set sachet-flexible et/ou au set de flexibles (6) et/ou au flexible (62, 63) ou à la section de flexible du dispositif de sorte que le concentré de lait infantile et l'eau puissent être versés séparément dans le biberon (10) et que la préparation du lait infantile, ou le mélange du concentré de lait infantile et de l'eau, se fasse seulement une fois que les différents ingrédients ont été versés dans le biberon (10) et se produise à l'intérieur du biberon (10), et/ou
qu'il soit possible de raccorder de manière séparée différentes sources de concentré de nourriture pour bébés de sorte que les différents concentrés ne se mélangent pas.

7. Dispositif conforme à l'une des revendications précédentes, **caractérisé en ce qu'**un dispositif de contrôle/régulation est prévu pour la commande du dispositif, notamment pour sa commande à distance.

8. Utilisation d'un dispositif conformément à l'une des revendications n° 1 à 7 aux fins de préparation de nourriture pour bébés, notamment de lait infantile.

9. Utilisation d'un sachet rempli de concentré de nourriture pour bébés et/ou d'un set sachet-flexible comme source de concentré de nourriture pour bébés (11) dans un dispositif conforme à l'une des revendications n° 1 à 7 aux fins de préparation de nourriture pour bébés, notamment de lait infantile.

10. Utilisation conformément à la revendication n° 9, le sachet (14) et/ou le set sachet-flexible présentant des éléments magnétiques ou métalliques pouvant interagir avec les aimants prévus sur les pinces (16, 17, 18, 19) pour écarter le sachet (14) et/ou le set sachet-flexible dans la plage respective à l'aide des pinces (16, 17, 18, 19).

11. Sachet de dosage et/ou de stérilisation (14) pour utilisation comme sachet (14) et/ou set sachet-flexible remplaçable ou conçu comme article jetable dans un dispositif conforme aux revendications n° 1 à 7, **caractérisé en ce**
**que** le sachet de dosage et/ou de stérilisation (14) comprend au moins deux raccords (141, 142) pour l'amenée et l'évacuation d'un liquide ou d'un concentré, et
**qu'**un premier raccord (141) est prévu dans une partie supérieure du sachet (14) et/ou du set sachet-flexible et qu'un deuxième raccord (142) est prévu sur une partie inférieure du sachet (14) et/ou du set sachet-flexible, le liquide ou le concentré pouvant être acheminé gravimétriquement et le sachet de dosage et/ou de stérilisation (14) étant fabriqué dans une matière résistante aux hautes températures.

12. Sachet de dosage et/ou de stérilisation (14) conforme à la revendication n° 11, le sachet (14) et/ou le set sachet-flexible présentant des éléments magnétiques ou métalliques pouvant interagir avec les aimants prévus sur les pinces (16, 17, 18, 19) pour écarter le sachet (14) et/ou le set sachet-flexible dans la plage respective à l'aide des pinces (16, 17, 18, 19).

13. Sachet de dosage et/ou de stérilisation conforme à la revendication n° 11 ou n° 12, avec une source de liquide raccordée.

14. Dispositif de préparation (4) pour un dispositif conforme à l'une des revendications n° 1 à 7, **caractérisé en ce**
**que** le dispositif de préparation (4) est accouplable à un récipient (10) et comprend un agitateur (43) qui est conçu pour mélanger le contenu du récipient auquel il est accouplé (10), l'agitateur (43) comprenant de préférence une ou plusieurs boules de pulvérisation, et
**que** le dispositif de préparation (4) comprend un adaptateur qui est conçu pour l'accouplement du récipient (10) au dispositif, et que l'adaptateur est conçu pour pouvoir être accroché à une section de crochet d'une section d'accueil réglable en hauteur du dispositif.

15. Dispositif de préparation (4) conforme à la revendication n° 14, **caractérisé en ce**
**que** le dispositif de préparation (4) est conçu en tant qu'élément consommable remplaçable et/ou qu'il réalise le mélange du concentré de nourriture pour bébés avec le liquide ou la dissolution du concentré de nourriture pour bébés dans le liquide.
